# EUROPEAN PATENT APPLICATION

(11) **EP 4 572 067 A1**
(43) Date of publication of application: **18.06.2025**
(21) Application number: 22954904.3
(22) Date of filing: 08.08.2022
(51) Int. Cl.: H02J 3/36

(54) **POWER CONVERSION SYSTEM AND CONTROL DEVICE**

(71) Applicant: MITSUBISHI ELECTRIC CORPORATION, Chiyoda-ku Tokyo 100-8310 (JP)
(72) Inventor: KAJIYAMA, Takuya, Tokyo 100-8310 (JP); FUJII, Toshiyuki, Tokyo 100-8310 (JP)
(74) Representative: Witte, Weller & Partner Patentanwälte mbB
(86) International application number: PCT/JP2022/030306
(87) International publication number: WO 2024/033982

(57) **Abstract**

A power conversion system (100) is connected to first and second AC systems (1, 2) and a DC system (3). The power conversion system (100) includes a first power converter (110) connected between the first AC system (1) and the DC system (3), a second power converter (120) connected between the second AC system (2) and the DC system (3), and a control system (130). The control system (130) controls the first and second power converters (110, 120) in a consolidated manner so that a total sum of a first AC power output from the first power converter (110) to the first AC system (1), a second AC power output from the second power converter (120) to the second AC system (2), and a DC power output from the power conversion system (100) to the DC system (3) becomes zero.

## Description

### TECHNICAL FIELD

The present disclosure relates to a power conversion system and a control system for the power conversion system.

### BACKGROUND ART

A high voltage direct current (HVDC) system employs a first power converter for converting power of an AC system into DC power and a second power converter for converting DC power into AC power. For example, Japanese Patent Laying-Open No. 2017-143626 (PTL 1) discloses a HVDC system in which modular multilevel converters (MMCs) consisting of a plurality of unit converters (hereinafter referred to as "converter cells") connected in cascade are employed as first and second power converters. Each converter cell consists of a plurality of switching elements and an energy storage element (typically, capacitor).

### CITATION LIST

### PATENT LITERATURE

PTL 1: Japanese Patent Laying-Open No. 2017-143626

### SUMMARY OF INVENTION

### TECHNICAL PROBLEM

In the above HVDC system, the first power converter converts AC power supplied from a first AC system into DC power and transmits the DC power to a second power converter through a DC transmission line. The second power converter converts the received DC power into AC power and supplies the AC power to a second AC system.

In a configuration where the first power converter and the second power converter are controlled independently of each other, when a disturbance such as a system fault occurs in one of the first and second AC systems to cause a large fluctuation in output power of the corresponding power converter, the control of the other power converter may not be able to respond promptly to this fluctuation. In this case, the of energy stored in the energy storage elements of the first and second power converters is unable to be maintained. As a result, when the capacitance of the energy storage element is small, the voltage of the energy storage element may fluctuate greatly, making it difficult to continue the operation of the HVDC system.

In view of the above problem, the present disclosure provides a power conversion system capable of continuing operation even in the event of a disturbance of a power system.

### SOLUTION TO PROBLEM

A power conversion system according to one embodiment is connected to first and second AC systems and a DC system. The power conversion system includes a first power converter connected between the first AC system and the DC system, a second power converter connected between the second AC system and the DC system, and a control system. The control system controls the first and second power converters in a consolidated manner so that a total sum of a first AC power output from the first power converter to the first AC system, a second AC power output from the second power converter to the second AC system, and a DC power output from the power conversion system to the DC system becomes zero.

### ADVANTAGEOUS EFFECTS OF INVENTION

According to the present disclosure, the first and second power converters can promptly respond even when a disturbance occurs in any part of the first and second AC systems and the DC system, so that the operation of the power conversion system can continue to operate even in the event of a disturbance.

### BRIEF DESCRIPTION OF DRAWINGS

Fig. 1 is a block diagram showing a configuration of a power conversion system according to a first embodiment.
Fig. 2 is an overall configuration diagram of a power converter shown in Fig. 1.
Fig. 3 is a circuit diagram showing a first configuration example of a converter cell shown in Fig. 2.
Fig. 4 is a circuit diagram showing a second configuration example of a converter cell shown in Fig. 2.
Fig. 5 is a block diagram showing a hardware configuration example of a control system 130.
Fig. 6 is a functional block diagram illustrating an internal configuration of control system 130.
Fig. 7 is a block diagram illustrating a configuration example of a basic control unit 132 shown in Fig. 6.
Fig. 8 is a block diagram illustrating a specific configuration example of an AC power controller 40 and an AC current controller 50 shown in Fig. 7.
Fig. 9 is a block diagram illustrating a first configuration example of a capacitor voltage controller 44 shown in Fig. 7.
Fig. 10 is a block diagram illustrating a second configuration example of capacitor voltage controller 44 shown in Fig. 7.
Fig. 11 is a block diagram illustrating a specific configuration example of an AC power controller 42 and an AC current controller 52 shown in Fig. 7.
Fig. 12 is a block diagram illustrating a specific configuration example of a capacitor voltage balance controller 56 and a loop current controller 58 shown in Fig. 7.
Fig. 13 is a block diagram illustrating a configuration example of basic control unit 132 according to a first modification of the first embodiment.
Fig. 14 is a block diagram illustrating a specific configuration example of an output fluctuation compensator 64 shown in Fig. 13.
Fig. 15 is a block diagram illustrating a configuration example of basic control unit 132 according to a second modification of the first embodiment.
Fig. 16 is a block diagram illustrating a configuration example of AC power controller 42 included in basic control unit 132 according to a third modification of the first embodiment.
Fig. 17 is a block diagram illustrating a specific configuration example of capacitor voltage balance controller 56 and loop current controller 58 included in basic control unit 132 according to a fourth modification of the first embodiment.
Fig. 18 is a block diagram illustrating a configuration example of basic control unit 132 in the power conversion system according to a second embodiment.
Fig. 19 is a block diagram illustrating a specific configuration example of an AC voltage controller 70 shown in Fig. 18.
Fig. 20 is a block diagram showing a configuration of the power conversion system according to a third embodiment.
Fig. 21 is a block diagram illustrating a first configuration example of basic control unit 132 in control system 130 shown in Fig. 20.
Fig. 22 is a block diagram illustrating a second configuration example of basic control unit 132 in control system 130 shown in Fig. 20.
Fig. 23 is a block diagram illustrating a modification of the second configuration example of basic control unit 132 shown in Fig. 22.
Fig. 24 is an overall configuration diagram of the power conversion system according to a fourth embodiment.
Fig. 25 is a block diagram illustrating a configuration example of basic control unit 132 in control system 130 according to the fourth embodiment.

### DESCRIPTION OF EMBODIMENTS

Embodiments will be described in detail below with reference to the drawings. The same or corresponding parts are denoted by the same reference signs and a description thereof is not repeated.

### First Embodiment.

### [Overall Configuration of Power Conversion Device]

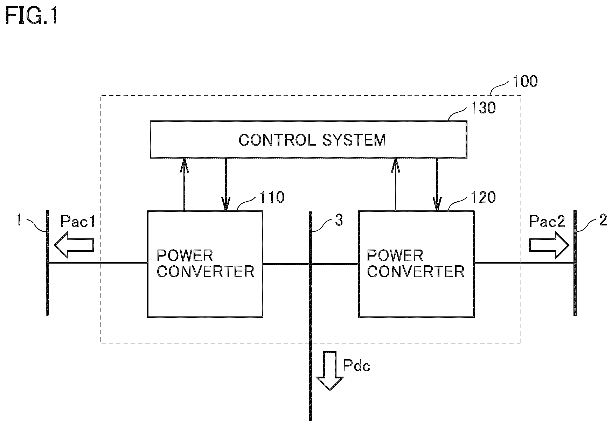

Fig. 1 is a block diagram showing a configuration of a power conversion system according to a first embodiment. A power conversion system 100 according to the first embodiment is a system for controlling power of a DC power transmission system. Power is received and transmitted between two AC systems 1 and 2 through a DC system 3.

AC systems 1 and 2 are each a three-phase AC system but depicted by one line in Fig. 1 for simplicity of illustration. AC systems 1 and 2 may be referred to as "AC circuits", and DC system 3 may be referred to as "DC circuit".

DC system 3 is a DC transmission line. When power conversion system 100 is adapted to a HVDC system, the length of DC transmission line could be, for example, a few tens to a few hundreds of kilometers. When power conversion system 100 is adapted to a back-to-back (BTB) system, the length the DC transmission line could be, for example, a few meters to a few tens of meters.

As shown in Fig. 1, power conversion system 100 according to the first embodiment includes a power converter 110, a power converter 120, and a control system 130. Power converter 110 is connected between AC system 1 and DC system 3. Power converter 120 is connected between AC system 2 and DC system 3. AC system 1 corresponds to an embodiment of "first AC system", and AC system 2 corresponds to an embodiment of "second AC system". Power converter 120 corresponds to an embodiment of "first power converter", and power converter 120 corresponds to an embodiment of "second power converter".

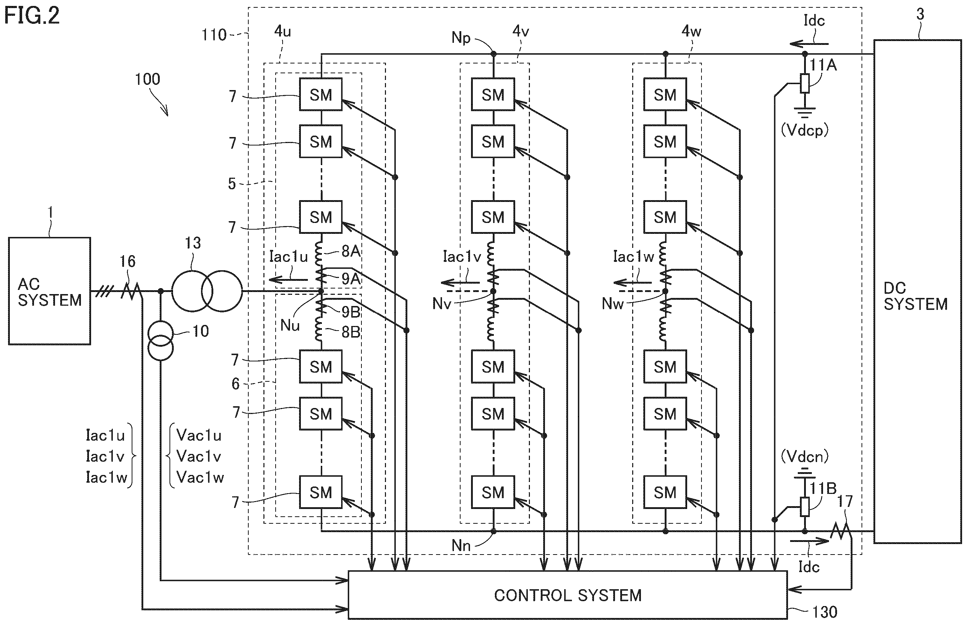

Power converters 110 and 120 are each a self-commutated power converter and function as a rectifier that converts AC power into DC power and an inverter that converts DC power into AC power. In the first embodiment, power converters 110 and 120 are configured with MMCs. The detail of the configuration of MMC-type power converters 110 and 120 will be described with reference to Fig. 2 to Fig. 4.

When power is transmitted from AC system 1 to AC system 2, power converter 110 operates as a rectifier (REC), and power converter 120 operates as an inverter (INV). Specifically, AC power is converted into DC power by power converter 110, and the converted DC power is transmitted through DC system 3. At a receiving end, DC power is converted into AC power by power converter 120, and the converted AC power is supplied to AC system 2. When power converter 110 operates as an inverter and power converter 120 operates as a rectifier, the conversion operation opposite to the above operation is performed.

Control device 130 controls the operation of power converters 110 and 120. Specifically, control system 130 controls the operation of power converters 110 and 120 in a consolidated manner so that the total sum of AC power Pac1 output from power converter 110, DC power Pdc output to DC system 3, and AC power Pac2 output from power converter 120 becomes zero.

In the following description, AC power Pac1 is defined as positive with the direction from power conversion system 100 to AC system 1. AC power Pac2 is defined as positive with the direction from power conversion system 100 to AC system 2. DC power Pdc is defined as positive with the direction from power conversion system 100 to DC system 3. DC power Pdc has a positive or negative value when another power conversion system or a DC load is connected to DC system 3 on the outside of power conversion system 100.

Here, it is assumed that power is transmitted by power conversion system 100 from AC system 1 to AC system 2. Assuming that power loss that occurs in power conversion system 100 is zero, in order to maintain energy stored in capacitors as energy storage elements of power converters 110 and 120, it is necessary that AC power Pac1 (Pac1 is negative) input from AC system 1 to power converter 110 should balance with the sum of AC power Pac2 (Pac2 is positive) output from power converter 120 to AC system 2 and DC power Pdc (Pdc is positive) output to DC system 3. This means that Pac1+Pac2+Pdc=0 holds among Pac1, Pac2, and Pdc.

However, in a configuration in which power converter 110 and power converter 120 are controlled independently, when a disturbance such as a system fault occurs in one of AC systems 1 and 2 to cause a large fluctuation in output power of the corresponding power converter, it may difficult that the other power converter promptly respond to this fluctuation. In this case, the energy stored in the energy storage elements of power converters 110 and 120 is unable to be maintained. As a result, when the capacitance of the energy storage element is small, the voltage of the energy storage element may fluctuate greatly, making it difficult to continue the operation of power conversion system 100.

In power conversion system 100 according to the first embodiment, control system 130 is configured to control the operation of power converters 110 and 120 in a consolidated manner. As used herein "control in a consolidated manner" means that control system 130 controls the operation of the other power converter, based on information on an output power from one of power converters 110 and 120, and a DC power output from power conversion system 100.

### [Configuration Example of Power Converter]

A configuration example of power converters 110 and 120 shown in Fig. 1 will now be described. Power converter 110 and power converter 120 have the same configuration, and a configuration example of power converter 110 will be described below as a representative example.

Fig. 2 is an overall configuration diagram of power converter 110 shown in Fig. 1. As shown in Fig. 2, in the first embodiment, power converter 110 is configured with a modular multilevel converter including a plurality of converter cells connected in series to each other. The "converter cell" may be referred to as "submodule", SM, or "unit converter".

Power converter 110 performs power conversion between AC system 1 and DC system 3. Power converter 110 includes a plurality of leg circuits 4u, 4v, and 4w. Leg circuits 4u, 4v, and 4w are connected in parallel with each other between a positive DC terminal (that is, high potential-side DC terminal) Np and a negative DC terminal (that is, low potential-side DC terminal) Nn. In the following description, a plurality of leg circuits 4u, 4v, and 4w are denoted as "leg circuit 4" when collectively referred to.

Leg circuit 4 is provided for each of a plurality of phases forming alternating current. Leg circuit 4 is connected between AC system 1 and DC system 3 and performs power conversion between the systems. In Fig. 2, AC system 1 is a three-phase AC system, and three leg circuits 4u, 4v, and 4w are provided respectively corresponding to U phase, V phase, and W phase.

AC input terminals Nu, Nv, and Nw respectively provided for leg circuits 4u, 4v, and 4w are connected to AC system 1 through a transformer 13. In Fig. 2, for simplification of illustration, the connection between AC input terminals Nv, Nw and transformer 13 is not shown.

High potential-side DC terminal Np and low potential-side DC terminal Nn connected in common to each leg circuit 4 are connected to DC system 3.

AC system 1 may be connected through an interconnecting reactor, instead of using transformer 13 in Fig. 2. Furthermore, instead of AC input terminals Nu, Nv, and Nw, leg circuits 4u, 4v, and 4w may be provided with respective primary windings, and leg circuits 4u, 4v, and 4w may be connected in terms of alternating current to transformer 13 or the interconnecting reactor through secondary windings magnetically coupled to the primary windings. In this case, the primary windings may be reactors 8A and 8B described below. Specifically, leg circuits 4 are electrically (that is, in terms of direct current or alternating current) connected to AC system 1 through connections provided for leg circuits 4u, 4v, and 4w, such as AC input terminals Nu, Nv, and Nw or the primary windings.

Leg circuit 4u includes an upper arm 5 from high potential-side DC terminal Np to AC input terminal Nu and a lower arm 6 from low potential-side DC terminal Nn to AC input terminal Nu. AC input terminal Nu that is a connection point between upper arm 5 and lower arm 6 is connected to transformer 13. High potential-side DC terminal Np and low potential-side DC terminal Nn are connected to DC system 3. Leg circuits 4v and 4w have a similar configuration, and hereinafter the configuration of leg circuit 4u is explained as a representative example.

Upper arm 5 includes a plurality of converter cells 7 connected in cascade and a reactor 8A. Converter cells 7 and reactor 8A are connected in series. Similarly, lower arm 6 includes a plurality of converter cells 7 connected in cascade and a reactor 8B. Converter cells 7 and reactor 8B are connected in series. In the following description, the number of converter cells 7 included in each of upper arm 5 and lower arm 6 is denoted as Ncell. Ncell is ≥ 2.

Reactor 8A may be inserted at any position in upper arm 5 of leg circuit 4u, and reactor 8B may be inserted at any position in lower arm 6 of leg circuit 4u. A plurality of reactors 8A and a plurality of reactors 8B may be provided. The inductances of the reactors may be different from each other. Only reactor 8A of upper arm 5 or only reactor 8B of lower arm 6 may be provided. The transformer connection may be adjusted to cancel the magnetic flux of DC component current, and leakage inductance of the transformer may act on AC component current, as an alternative to the reactor. The provision of reactors 8A and 8B can suppress abrupt increase of fault current in the event of a fault in AC system 1 or DC system 3.

Power conversion system 100 further includes an AC voltage detector 10, an AC current detector 16, DC voltage detectors 11A and 11B, arm current detectors 9A and 9B provided for each leg circuit 4, and a DC current detector 17 as detectors for detecting the electrical quantity (current, voltage, etc.) used in control. Signals detected by these detectors are input to control system 130.

In Fig. 2, the signal lines of signals input from the detectors to control system 130 and the signal lines of signals input and output between control system 130 and converter cells 7 are depicted partially collectively for simplicity of illustration, but, in actuality, they are provided individually for each detector and each converter cell 7. Signal lines between each converter cell 7 and control system 130 may be provided separately for transmission and reception. The signal lines are formed with, for example, optical fibers.

AC voltage detector 10 detects U-phase AC voltage Vac1u, V-phase AC Vac1v, and W-phase AC voltage Vac1w of AC system 1. In the following description, Vac1u, Vac1v, and Vac1w may be collectively referred to as "Vac1".

AC current detector 16 detects U-phase AC current Iac1u, V-phase AC current Iac1v, and W-phase AC current Iac1w of AC system 1. In the following description, Iac1u, Iac1v, and Iac1w may be collectively referred to as "Iac1".

DC voltage detector 11A detects DC voltage Vdcp at high potential-side DC terminal Np connected to DC system 3. DC voltage detector 11B detects DC voltage Vdcn at low potential-side DC terminal Nn connected to DC system 3. The difference between DC voltage Vdcp and DC voltage Vdcn (Vdcp-Vdcn) is defined as "DC voltage Vdc". DC current detector 17 detects DC current Idc flowing through high potential-side DC terminal Np or low potential-side DC terminal Nn.

Arm current detectors 9A and 9B provided in leg circuit 4u for U phase respectively detect upper arm current Ipu flowing through upper arm 5 and lower arm current Inu flowing through lower arm 6. Arm current detectors 9A and 9B provided in leg circuit 4v for V phase respectively detect upper arm current Ipv and lower arm current Inv. Arm current detectors 9A and 9B provided in leg circuit 4w for W phase respectively detect upper arm current Ipw and lower arm current Inw flowing through upper arm 5. In the following description, upper arm currents Ipu, Ipv, and Ipw may be collectively referred to as "upper arm current Iarmp", and lower arm currents Inu, Inv, and Inw may be collectively referred to as "lower arm current Iarmn".

### (Configuration Example of Converter Cell)

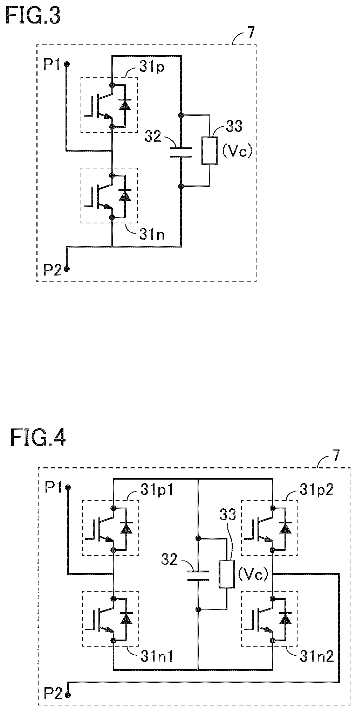

Fig. 3 is a circuit diagram showing a first configuration example of converter cell 7 shown in Fig. 2. As shown in Fig. 3, converter cell 7 according to the first configuration example has a circuit configuration called half bridge configuration.

Converter cell 7 includes a series of two switching elements 31p and 31n connected in series, an energy storage element 32, a voltage detector 33, and input/output terminals P1 and P2. The series of switching elements 31p and 31n and energy storage element 32 are connected in parallel. Voltage detector 33 detects voltage Vc of energy storage element 32.

Both terminals of switching element 31n are connected to input/output terminals P1 and P2. With switching operation of switching elements 31p and 31n, converter cell 7 outputs voltage Vc of energy storage element 32 or zero voltage between input/output terminals P1 and P2. When switching element 31p is turned ON and switching element 31n is turned OFF, voltage Vc of energy storage element 32 is output from converter cell 7. When switching element 31p is turned OFF and switching element 31n is turned ON, converter cell 7 outputs zero voltage.

Fig. 4 is a circuit diagram showing a second configuration example of converter cell 7 shown in Fig. 2. As shown in Fig. 4, converter cell 7 according to the second configuration example has a circuit configuration called full bridge configuration.

Converter cell 7 includes a first series of two switching elements 31p1 and 31n1 connected in series, a second series of two switching elements 31p2 and 31n2 connected in series, an energy storage element 32, a voltage detector 33, and input/output terminals P1 and P2. The first series, the second series, and energy storage element 32 are connected in parallel. Voltage detector 33 detects voltage Vc of energy storage element 32.

The middle point of switching element 31p1 and switching element 31n1 is connected to input/output terminal P1. Similarly, the middle point of switching element 31p2 and switching element 31n2 is connected to input/output terminal P2. With switching operation of switching elements 31p1, 31n1, 31p2, and 31n2, converter cell 7 outputs voltage Vc, -Vc of energy storage element 32 or zero voltage between input/output terminals P1 and P2.

In Fig. 3 and Fig. 4, switching elements 31p, 31n, 31p1, 31n1, 31p2, and 31n2 are configured, for example, such that a freewheeling diode (FWD) is connected in anti-parallel with a self-turn-off semiconductor switching element such as an insulated gate bipolar transistor (IGBT) or a gate commutated turn-off (GCT) thyristor.

In Fig. 3 and Fig. 4, a capacitor such as a film capacitor is mainly used for energy storage element 32. Power storage element 32 may hereinafter be called "capacitor". In the following, voltage Vc of energy storage element 32 may be referred to as "capacitor voltage Vc".

As shown Fig. 2, converter cells 7 are connected in cascade. In each of Fig. 3 and Fig. 4, in converter cell 7 arranged in upper arm 5, input/output terminal P1 is connected to input/output terminal P2 of adjacent converter cell 7 or high potential-side DC terminal Np, and input/output terminal P2 is connected to input/output terminal P1 of adjacent converter cell 7 or AC input terminal Nu. Similarly, in converter cell 7 arranged in lower arm 6, input/output terminal P1 is connected to input/output terminal P2 of adjacent converter cell 7 or AC input terminal Nu, and input/output terminal P2 is connected to input/output terminal P1 of adjacent converter cell 7 or low potential-side DC terminal Nn.

In the following, converter cell 7 has the half bridge cell configuration shown in Fig. 3, and a semiconductor switching element is used as a switching element, and a capacitor is used as a energy storage element, by way of example. However, converter cell 7 that constitutes power converters 110 and 120 may have the full bridge cell configuration shown in Fig. 4. A converter cell having a configuration other than those illustrated in the examples above, for example, a converter cell having a circuit configuration called clamped double cell may be used, and the switching element and the energy storage element are also not limited to the examples above.

### [Configuration of Control System]

### (Hardware Configuration Example of Control System)

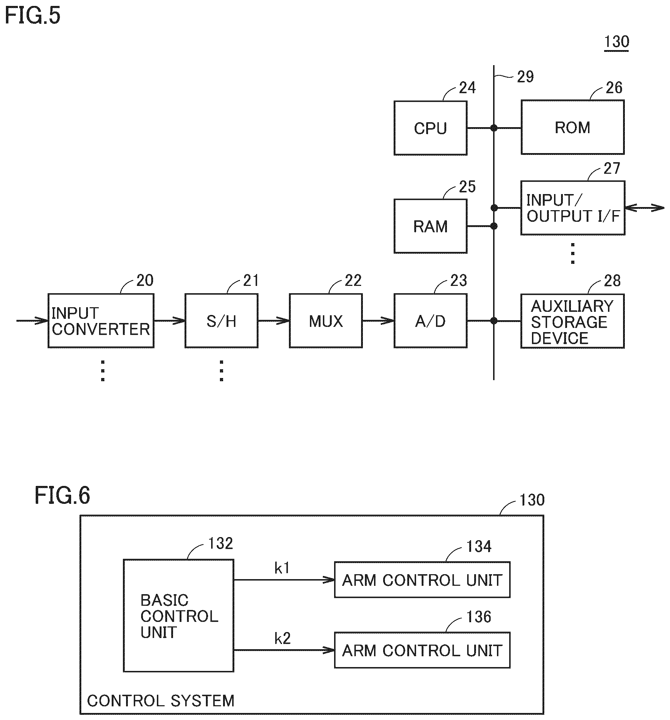

Fig. 5 is a block diagram showing a hardware configuration example of control system 130. Fig. 5 shows an example in which control system 130 is configured with a computer.

As shown in Fig. 5, control system 130 includes one or more input converters 20, one or more sample hold (S/H) circuits 21, a multiplexer (MUX) 22, and an analog-to-digital (A/D) converter 23. Control device 130 further includes one or more central processing units (CPU) 24, random access memory (RAM) 25, and read only memory (ROM) 26. Control device 130 further includes one or more input/output interfaces 27, an auxiliary storage device 28, and a bus 29 connecting the components above to each other.

Input converter 20 includes an auxiliary transformer (not shown) for each input channel. Each auxiliary transformer converts a detection signal from each electrical quantity detector in Fig. 2 into a signal having a voltage level suitable for subsequent signal processing.

Sample hold circuit 21 is provided for each input converter 20. Sample hold circuit 21 samples and holds a signal representing the electrical quantity received from the corresponding input converter 20 at a predetermined sampling frequency.

Multiplexer 22 successively selects the signals held by a plurality of sample hold circuits 21. A/D converter 23 converts a signal selected by multiplexer 22 into a digital value. A plurality of A/D converters 23 may be provided to perform A/D conversion of detection signals of a plurality of input channels in parallel.

CPU 24 controls the entire control system 130 and performs computational processing under instructions of a program. RAM 25 as a volatile memory and ROM 26 as a nonvolatile memory are used as a main memory of CPU 24. ROM 26 stores a program and setting values for signal processing. Auxiliary storage device 28 is a nonvolatile memory having a larger capacity than ROM 26 and stores a program and data such as electrical quantity detection values.

Input/output interface 27 is an interface circuit for communication between CPU 24 and an external device.

Unlike the example in Fig. 5, at least a part of control system 130 may be configured using circuitry such as a field programmable gate array (FPGA) and an application specific integrated circuit (ASIC). That is, the construction of each functional block illustrated in Fig. 6 described later may be configured based on the computer illustrated in Fig. 5 or may be at least partially configured with circuitry such as an FPGA and an ASIC. At least a part of the function of each functional block may be configured with an analog circuit.

### (Functional Configuration Example of Control System)

Fig. 6 is a functional block diagram illustrating an internal configuration of control system 130. As shown in Fig. 6, control system 130 includes a basic control unit 132, an arm control unit 134, and an arm control unit 136.

The configuration of basic control unit 132 and arm control units 134 and 136 is implemented, for example, by a processing circuit. The processing circuit may be dedicated hardware or may be CPU 24 that executes a program stored in the internal memory of control system 130. When the processing circuit is dedicated hardware, the processing circuit is configured with, for example, an FPGA, an ASIC, or a combination thereof.

Basic control unit 132 generates arm voltage command value k1 for power converter 110 and arm voltage command value k2 for power converter 120, using the electrical quantity measured by each of the above detectors. Arm voltage command value k1 includes six arm voltage command values for upper arms 5 and lower arms 6 of U phase, V phase, and W phase that constitute power converter 110. Arm voltage command value k2 includes six arm voltage command values for upper arms 5 and lower arms 6 of U phase, V phase, and W phase that constitute power converter 120.

Arm control unit 134 generates a gate control signal for controlling ON and OFF of a switching element in each arm of power converter 110, based on arm voltage command value k1, and outputs the gate control signal to the corresponding switching element. Typically, arm control unit 134 compares arm voltage command value k1 with a carrier signal and generates a gate control signal as a pulse width modulation (PWM) signal based on the comparison result. For example, a triangular wave is used as the carrier signal.

Arm control unit 136 generates a gate control signal for controlling ON and OFF of a switching element in each arm of power converter 120, based on arm voltage command value k2, and outputs the gate control signal to the corresponding switching element. Typically, arm control unit 136 compares arm voltage command value k2 with a carrier signal and generates a gate control signal as a PWM signal based on the comparison result. In the following description, it is assumed that each signal is expressed in terms of per unit (PU) in the inside of control system 130.

### (Configuration Example of Basic Control Unit 132)

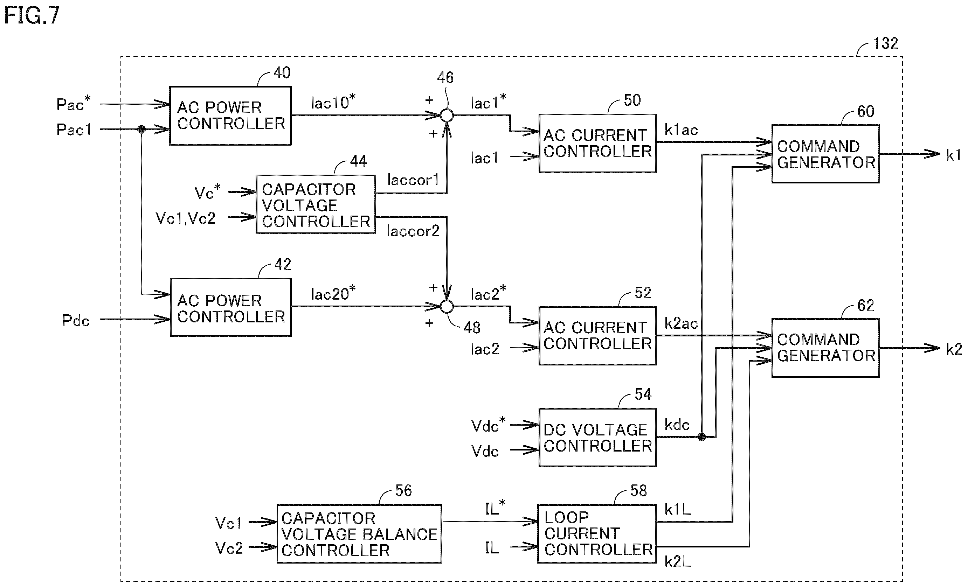

Fig. 7 is a block diagram illustrating a configuration example of basic control unit 132 shown in Fig. 6. As shown in Fig. 7, basic control unit 132 includes AC power controllers 40 and 42, a capacitor voltage controller 44, adders 46 and 48, AC current controllers 50 and 52, a DC voltage controller 54, a capacitor voltage balance controller 56, a loop current controller 58, and command generators 60 and 62.

The configuration example in Fig. 7 is directed to control for matching AC power Pac1 output from power converter 110 to AC system 1 to AC power command value Pac*. In this control, the operation of power converter 110 is controlled so that AC power Pac1 matches with AC power command value Pac*, and the operation of power converter 120 is controlled so that the total sum of AC power Pac1, DC power Pdc, and AC power Pac2 becomes zero.

The configuration example in Fig. 7 further performs: control for eliminating deficiency and excess of stored energy in capacitors 32 in all converter cells 7 of power converters 110 and 120; and control for equalizing the level of capacitor voltages Vc in converter cells 7 of power converters 110 and 120 and eliminating imbalance in stored energy of converter cells 7 between power converters 110 and 120.

Specifically, AC power controller 40 generates AC current command value Iac10* that is a command value of AC current output from power converter 110, through feedback control for reducing a deviation between AC power Pac1 output from power converter 110 and AC power command value Pac* to zero. AC power Pac1 is calculated based on AC voltage Vac1 and AC current Iac1 shown in Fig. 2. AC power command value Pac* is a value preset, for example, by a system operator or the like.

Capacitor voltage controller 44 receives capacitor voltage Vc detected by voltage detector 33 in each converter cell 7 of power converter 110 and receives capacitor voltage Vc detected by voltage detector 33 in each converter cell 7 of power converter 120. In the following description, capacitor voltage Vc of each converter cell 7 included in power converter 110 may be referred to as "capacitor voltage Vc1", and capacitor voltage Vc of each converter cell 7 included in power converter 120 may be referred to as "capacitor voltage Vc2".

Capacitor voltage controller 44 generates voltage evaluation value Vcg for evaluating the total sum of stored energy of all converter cells 7 of power converters 110 and 120, from capacitor voltages Vc1 of all converter cells 7 of power converter 110 and capacitor voltages Vc2 of all converter cells 7 of power converter 120.

Capacitor voltage controller 44 generates AC current command correction value Iaccor1 for correcting AC current command value Iac10* of power converter 110 and AC current command correction value Iaccor2 for correcting AC current command value Iac20* of power converter 120, through feedback control for reducing a deviation between voltage evaluation value Vcg and all voltage command value Vc* to zero. All voltage command value Vc* is a reference value of capacitor voltage Vc that corresponds to a reference value of stored energy of capacitor 32 in each converter cell 7 of power converters 110 and 120. All voltage command value Vc* may be a fixed value or a variable value obtained by some computation.

AC current command correction values Iaccor1 and Iaccor2 correspond to an AC current value for eliminating deficiency and excess of stored energy of all converter cells 7 of power converters 110 and 120 by controlling the entire level of capacitor voltage Vc of each converter cell 7 of power converters 110 and 120 to all voltage command value Vc*.

Adder 46 adds AC current command correction value Iaccor1 to AC current command value Iac10* to generate AC current command value Iac1*.

AC current controller 50 generates AC voltage command value k1ac that is a command value of AC voltage output from power converter 110, through feedback control for reducing a deviation between AC current command value Iac1* and AC current Iac1 detected by AC current detector 16 to zero.

### (Configuration Example of AC Power Controller 40 and AC Current Controller 50)

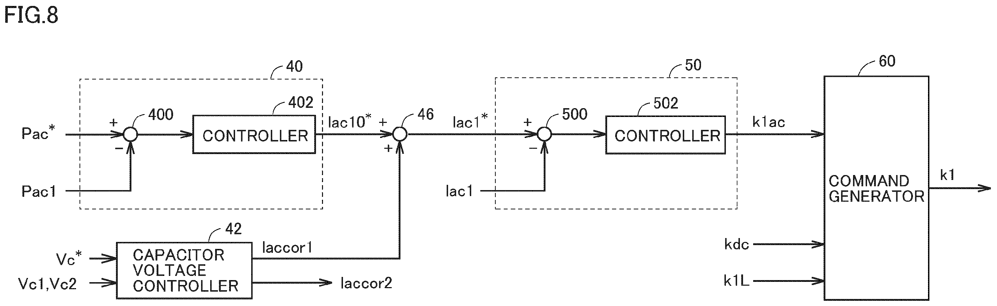

Fig. 8 is a block diagram illustrating a specific configuration example of AC power controller 40 and AC current controller 50 shown in Fig. 7.

As shown in Fig. 8, AC power controller 40 includes a subtracter 400 and a controller 402. Subtracter 400 subtracts AC power Pac1 from AC power command value Pac*. Controller 402 executes control computation so that deviation ΔPac1 between AC power command value Pac* and AC power Pac1 that is calculated by subtracter 400 becomes zero, and outputs AC current command value Iac10* as a control computation result. Controller 402 may be configured as a PI controller that performs proportional computation and integral computation for deviation ΔPac1 or may be configured as a PID controller that additionally performs differential computation. Alternatively, another configuration of a controller for use in feedback control may be used. Alternatively, controller 402 may be a combination of feedback controller and feedforward controller.

Adder 46 adds AC current command value Iac10* and AC current command correction value Iaccor1 generated by capacitor voltage controller 44 to generate AC current command value Iac1*.

AC current controller 50 includes a subtracter 500 and a controller 502. Subtracter 500 subtracts AC current Iac1 from AC current command value Iac1*. Controller 502 executes control computation so that deviation ΔIac1 between AC current command value Iac1* and AC current Iac1 that is calculated by subtracter 500 becomes zero, and outputs AC voltage command value k1ac as a control computation result. Controller 502 may be configured as a PI controller that performs proportional computation and integral computation for deviation ΔIac1 or may be configured as a PID controller that additionally performs differential computation. Alternatively, another configuration of a controller for use in feedback control may be used. Alternatively, controller 502 may be a combination of feedback controller and feedforward controller.

### (Configuration Example of Capacitor Voltage Controller 44)

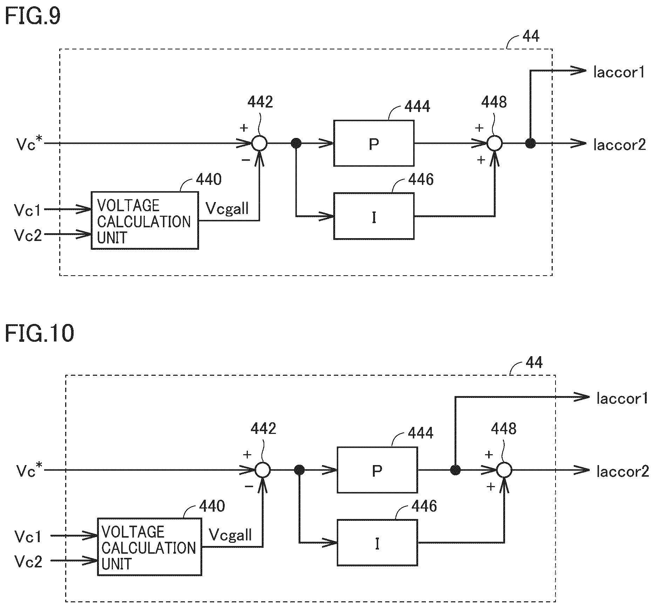

Fig. 9 is a block diagram illustrating a first configuration example of capacitor voltage controller 44 shown in Fig. 7. As shown in Fig. 9, capacitor voltage controller 44 includes a voltage calculation unit 440, a subtracter 442, a proportional element 444, an integrator 446, and an adder 448.

Voltage calculation unit 440 receives capacitor voltage Vc1 detected by voltage detector 33 of each converter cell 7 of power converter 110, and capacitor voltage Vc2 detected by voltage detector 33 of each converter cell 7 of power converter 120.

Voltage calculation unit 440 generates voltage evaluation value Vcgall for evaluating the total sum of stored energy of all converter cells 7 of power converters 110 and 120, from capacitor voltages Vc1 of all converter cells 7 of power converter 110 and capacitor voltages Vc2 of all converter cells 7 of power converter 120.

Specifically, voltage calculation unit 440 generates voltage evaluation value Vcg1 indicating the total sum of stored energy of all converter cells 7 of power converter 110, from capacitor voltage Vc1 of each converter cell 7 of power converter 110. Voltage evaluation value Vcg1 is obtained as an average value of capacitor voltages Vc1 of all converter cells 7 of power converter 110 or an average value of capacitor voltages Vc1 of a plurality of converter cells 7 belonging to each phase leg circuit or each arm. Voltage evaluation value Vcg1 may be obtained as a total value or representative value of capacitor voltages Vc1 of all converter cells 7 of power converter 110. As the representative value, a median, maximum, minimum, or the like of capacitor voltages Vc1 of all converter cells 7 can be employed as appropriate.

Voltage calculation unit 440 further generates voltage evaluation value Vcg2 indicating the total sum of stored energy of all converter cells 7 of power converter 120, from capacitor voltage Vc2 of each converter cell 7 of power converter 120. Voltage evaluation value Vcg2 is obtained as an average value of capacitor voltages Vc2 of all converter cells 7 of power converter 120 or an average value of capacitor voltages Vc2 of a plurality of converter cells 7 belonging to each phase leg circuit or each arm. Voltage evaluation value Vcg2 may be obtained as a total value or representative value of capacitor voltages Vc2 of all converter cells 7 of power converter 120. As the representative value, a median, maximum, minimum, or the like of capacitor voltages Vc2 of all converter cells 7 can be employed as appropriate.

Subsequently, voltage calculation unit 440 generates voltage evaluation value Vcgall for evaluating the total sum of stored energy of all converter cells 7 of power converters 110 and 120, using voltage evaluation value Vcg1 and voltage evaluation value Vcg2. For example, voltage evaluation value Vcgall is obtained as an average value of voltage evaluation value Vcg1 and voltage evaluation value Vcg2.

Subtracter 442 subtracts voltage evaluation value Vcgall from all voltage command value Vc*. Proportional element 444 performs proportional computation for deviation ΔVc between all voltage command value Vc* and voltage evaluation value Vcgall that is calculated by subtracter 442. Integrator 446 performs integral computation for deviation ΔVc.

Adder 448 adds a computation value by proportional element 444 and a computation value by integrator 446 to generate AC current command correction values Iaccor1 and Iaccor2. As described above, AC current command correction value Iaccor1 corresponds to a current value for correcting AC current command value Iac10* of power converter 110 in order to control the entire level of capacitor voltage Vc of each converter cell 7 of power converters 110 and 120 to all voltage command value Vc*. AC current command correction value Iaccor2 corresponds to a current value for correcting AC current command value Iac20* of power converter 120 in order to control the entire level of capacitor voltage Vc of each converter cell 7 of power converters 110 and 120 to all voltage command value Vc*.

Fig. 10 is a block diagram illustrating a second configuration example of capacitor voltage controller 44 shown in Fig. 7. The second configuration example differs from the first configuration example shown in Fig. 9 in the method for generating AC current command correction value Iaccor1.

Specifically, in the second configuration example, proportional element 444 performs proportional computation for deviation ΔVc between all voltage command value Vc* and voltage evaluation value Vcgall that is calculated by subtracter 442 to generate AC current command correction value Iaccor1. On other hand, adder 448 adds a computation value by proportional element 444 and a computation value by integrator 446 to generate AC current command correction value Iaccor2.

In the second configuration example, when all voltage command value Vc* matches with voltage evaluation value Vcgall and deviation ΔVc becomes zero, AC current command correction value Iaccor1 also becomes zero. It follows that AC current command value Iac1* matches with AC current command value Iac0*. This configuration can prevent the control of capacitor voltage Vc1 of each converter cell 7 of power converter 110 from interfering with the control of AC power Pac1 by AC power controller 40.

Returning to Fig. 7, AC power controller 42 feeds forward AC power Pac1 output from power converter 110 and DC power Pdc output to DC system 3 to generate AC current command value Iac20* that is a command value of AC current output from power converter 120. The feedforward of AC power Pac1 and DC power Pdc is performed in order to improve the responsivity of AC power Pac2 to fluctuations of AC power Pac1 output from power converter 110 to AC system 1 and fluctuations of DC power Pdc output to DC system 3.

Adder 48 adds AC current command correction value Iaccor2 to AC current command value Iac20* to generate AC current command value Iac2*.

AC current controller 52 generates AC voltage command value k2ac that is a command value of AC voltage output from power converter 120, through feedback control for reducing a deviation between AC current command value Iac2* and AC current Iac2 detected by AC current detector 16 to zero.

### (Configuration Example of AC Power Controller 42 and AC Current Controller 52)

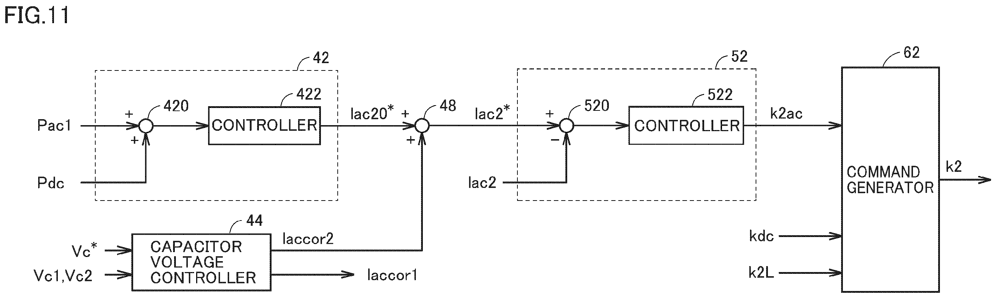

Fig. 11 is a block diagram illustrating a specific configuration example of AC power controller 42 and AC current controller 52 shown in Fig. 7.

As shown in Fig. 11, AC power controller 42 includes an adder 420 and a controller 422. Adder 420 adds AC power Pac1 output from power converter 110 to AC system 1 and DC power Pdc output to DC system 3. AC power Pac1 is calculated based on AC voltage Vac1 and AC current Iac1 shown in Fig. 2. DC power Pdc is calculated based on DC voltage Vdc and DC current Idc shown in Fig. 2. DC voltage Vdc is calculated as a difference between DC voltage Vdcp and DC voltage Vdcn. A voltage between DC terminals Np and Nn may be directly detected and the detected value may be used as DC voltage Vdc.

Controller 422 multiplies the addition value (Pac1+Pdc) obtained by computation by a predetermined feedforward gain to generate AC current command value Iac20*. This feedforward gain can be set such that the relation Pac1+Pac2+Pdc=0 is satisfied. In this way, AC power controller 42 can change AC current command value Iac20* in response to change in AC power Pac1 and DC power Pdc through feedforward control of AC power Pac2.

Adder 48 adds AC current command value Iac20* and AC current command correction value Iaccor2 generated by capacitor voltage controller 44 to generate AC current command value Iac2*.

AC current controller 52 includes a subtracter 520 and a controller 522. Subtracter 520 subtracts AC current Iac2 from AC current command value Iac2*. Controller 522 executes control computation so that deviation ΔIac2 between AC current command value Iac2* and AC current Iac2 that is calculated by subtracter 520 becomes zero, and outputs AC voltage command value k2ac* as a control computation result. Controller 522 may be configured as a PI controller that performs proportional computation and integral computation for deviation ΔIac2 or may be configured as a PID controller that additionally performs differential computation. Alternatively, another configuration of a controller for use in feedback control may be used. Alternatively, controller 522 may be a combination of feedback controller and feedforward controller.

In the configuration example in Fig. 11, AC power Pac1 used by AC power controller 42 is calculated from AC voltage Vac1 and AC current Iac1 shown in Fig. 2, but a value obtained by filtering the calculated value may be used.

Alternatively, as described later, AC power controller 42 may use AC power command value Pac* instead of AC power Pac1. In this case, when deviation ΔPac1 between AC power command value Pac* and AC power Pac1 is smaller than a predetermined threshold value, AC power command value Pac* may be used, and in response to deviation ΔPac1 exceeding the threshold value, AC power command value Pac* may be switched to AC power Pac1.

Returning to Fig. 7, DC voltage controller 54 generates DC voltage command value kdc that is a command value of DC voltage output from power converters 110 and 120, through feedback control for reducing a deviation between DC voltage Vdc and DC voltage command value Vdc* to zero. DC voltage Vdc is a voltage obtained from DC voltages Vdcp and Vdcn detected by DC voltage detectors 11A and 11B (Vdc=Vdcp-Vdcn). DC voltage command value Vdc* is a value preset by a system operator or the like.

Capacitor voltage balance controller 56 receives capacitor voltage Vc1 detected by voltage detector 33 of each converter cell 7 of power converter 110, and capacitor voltage Vc2 detected by voltage detector 33 of each converter cell 7 of power converter 120. Capacitor voltage balance controller 56 generates loop current command value IL* so as to eliminate imbalance in stored energy of each arm of power converter 110 and power converter 120.

Loop current controller 58 generates loop control command values k1L and k2L for controlling loop current IL to follow loop current command value IL*. "Loop current" is current that circulates through the inside of power conversion system 100 and includes current that circulates through the inside of each power converter and current flowing between power converter 110 and power converter 120.

### (Configuration Example of Capacitor Voltage Balance Controller 56 and Loop Current Controller 58)

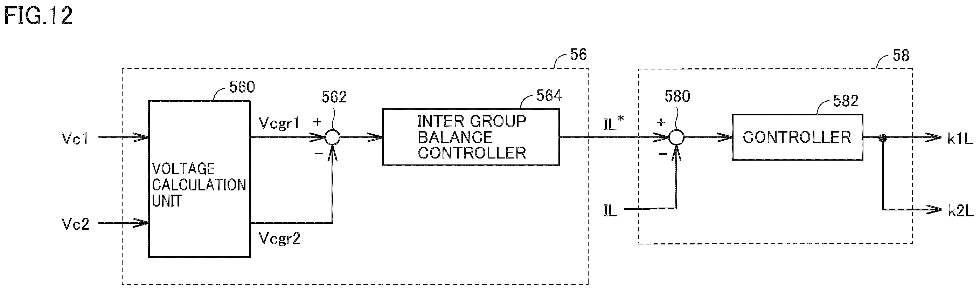

Fig. 12 is a block diagram illustrating a specific configuration example of capacitor voltage balance controller 56 and loop current controller 58 shown in Fig. 7. As shown in Fig. 12, capacitor voltage balance controller 56 includes a voltage calculation unit 560, a subtracter 562, and an inter group balance controller 564.

Voltage calculation unit 560 receives capacitor voltage Vc1 detected by voltage detector 33 in each converter cell 7 of power converter 110, and capacitor voltage Vc2 detected by voltage detector 33 in each converter cell 7 of power converter 120.

Voltage calculation unit 560 generates group voltage evaluation value Vcgr1 indicating the total sum of stored energy of capacitors 32 of converter cells 7 for each predetermined group in power converter 110. Voltage calculation unit 560 also generates group voltage evaluation value Vcgr2 indicating the total sum of stored energy of capacitors 32 of converter cells 7 for each predetermined group in power converter 120.

For example, each of group voltage evaluation values Vcgr1 and Vcgr2 includes U-phase upper arm voltage evaluation value Vcgup, U-phase lower arm voltage evaluation value Vcgun, V-phase upper arm voltage evaluation value Vcgvp, V-phase lower arm voltage evaluation value Vcgvn, W-phase upper arm voltage evaluation value Vcgwp, and W-phase lower arm voltage evaluation value Vcgwp for evaluating the total sum of stored energy of a plurality of (Ncell) converter cells 7 included in each arm, for each of upper arm 5 and lower arm 6 of each leg circuit 4 of the corresponding power converter. Alternatively, instead of or in addition to a voltage evaluation value for each arm, each of group voltage evaluation values Vcgr1 and Vcgr2 may include U-phase voltage evaluation value Vcgu, V-phase voltage evaluation value Vcgv, and W-phase voltage evaluation value Vcgw for evaluating the total sum of stored energy of a plurality of (2×Ncell) converter cells 7 included in each of leg circuits 4u (U phase), 4v (V phase), and 4w (W phase) of the corresponding power converter.

Voltage evaluation value Vcgr1 is obtained as an average value of capacitor voltages Vc1 of all converter cells 7 of a plurality of converter cells 7 belonging to each group (each arm) of power converter 110. Voltage evaluation value Vcgr2 is obtained as an average value of capacitor voltages Vc1 of all converter cells 7 of a plurality of converter cells 7 belonging to each group (each arm) of power converter 120. Voltage evaluation values Vcgr1 and Vcgr2 may be obtained as a total value or representative value of capacitor voltages Vc of a plurality of converter cells 7 belonging to each group. As the representative value, a median, maximum, minimum, or the like of capacitor voltages Vc of a plurality of converter cells 7 can be employed as appropriate.

Subtracter 562 subtracts group voltage evaluation value Vcgr2 from group voltage evaluation value Vcgr1. Inter group balance controller 564 executes control computation so that a deviation of group voltage evaluation value Vcgr2 from group voltage evaluation value Vcgr1 becomes zero, and generates loop current command value IL* as a control computation result. Loop current command value IL* corresponds to a loop current value that flows through the inside of each power converter and between power converter 110 and power converter 120 for equalizing the level of capacitor voltages Vc of converter cells 7 between the groups of power converter 110 and power converter 120 and eliminating imbalance in stored energy of converter cell 7 between the groups.

Loop current controller 58 includes a subtracter 580 and a controller 582. Subtracter 580 subtracts loop current IL from loop current command value IL*. Controller 582 executes control computation so that a deviation of loop current IL from loop current command value IL* becomes zero, and generates loop control command values k1L and k2L as a control computation result. Controller 582 may be configured as a PI controller that performs proportional computation and integral computation for a deviation or may be configured as a PID controller that additionally performs differential computation. Alternatively, another configuration of a controller for use in feedback control may be used. Alternatively, controller 582 may be a combination of feedback controller and feedforward controller.

In this way, capacitor voltage balance controller 56 suppresses imbalance in stored energy in each group included in power converters 110 and 120 by controlling loop current IL using voltage evaluation values Vcgr1 and Vcgr2.

Returning to Fig. 7, command generator 60 combines AC voltage command value k1ac generated by AC current controller 50, DC voltage command value kdc generated by DC voltage controller 54, and loop control command value k1L generated by loop current controller 58 to generate arm voltage command value k1 for power converter 110. Arm voltage command value k1 includes six arm voltage command values for upper arms 5 and lower arms 6 of U phase, V phase, and W phase that constitute power converter 110.

Command generator 62 combines AC voltage command value k2ac generated by AC current controller 52, DC voltage command value kdc generated by DC voltage controller 54, and loop control command value k2L generated by loop current controller 58 to generate arm voltage command value k2 for power converter 120. Arm voltage command value k2 includes six arm voltage command values for upper arms 5 and lower arms 6 of U phase, V phase, and W phase that constitute power converter 120.

### [Operation of Power Conversion System 100]

The operation of power conversion system 100 according to the first embodiment will now be described.

Control device 130 controls the operation of power converter 110 so that AC power Pac1 output from power converter 110 to AC system 1 follows AC power command value Pac*. In this control of power converter 110, AC current command value Iac10* is generated for controlling AC power Pac1 to follow AC power command value Pac*.

Control device 130 further executes control for eliminating deficiency and excess of stored energy in all converter cells 7 of power converters 110 and 120. In this control, AC current command correction values Iaccor1 and Iaccor2 are generated for controlling voltage evaluation value Vcgall for evaluating the total sum of stored energy of all converter cells 7 of power converters 110 and 120 to follow all voltage command value Vc*. AC current command value Iac1* is then generated by adding AC current command correction value Iaccor1 to AC current command value Iac10*. AC voltage command value k1ac is generated for controlling AC current Iac1 to follow AC current command value Iac1*.

Control device 130 also executes control for eliminating imbalance in stored energy of converter cells 7 in each group (arm) included in power converters 110 and 120. In this control, group voltage evaluation value Vcgr1 indicating the total sum of stored energy of converter cells 7 for each group in power converter 110, and group voltage evaluation value Vcgr2 indicating the total sum of stored energy of converter cells 7 for each group in power converter 120 are generated. Loop current command value IL* is then generated so that the level of capacitor voltages Vc of converter cells 7 is equalized between the groups of each power converter, and that the level of capacitor voltages Vc of converter cells 7 is equalized between power converters 110 and 120. Loop control command values k1L and k2L are generated for controlling loop current IL to follow loop current command value IL*.

Control device 130 combines AC voltage command value k1ac, DC voltage command value kdc that is a command value of DC voltage output from power converter 110, and loop control command value k1L to generate arm voltage command value k1 for power converter 110.

Concurrently with the control of power converter 110 described above, control system 130 controls the operation of power converter 120 so that the total sum of AC power Pac2 output from power converter 120 to AC system 2, AC power Pac1 output from power converter 110 to AC system 1, and DC power Pdc output to DC system 3 becomes zero. In this control of power converter 120, AC current command value Iac20* is generated by feeding forward the sum of AC power Pac1 and DC power Pdc.

AC current command value Iac2* is then generated by adding AC current command correction value Iaccor2 to this AC current command value Iac20*. AC voltage command value k2ac is generated for controlling AC current Iac2 to follow AC current command value Iac2*.

Control device 130 combines AC voltage command value k2ac, DC voltage command value kdc that is a command value of DC voltage output from power converter 120, and loop control command value k2L described above to generate arm voltage command value k2 for power converter 120.

In this way, with the configuration in which power converters 110 and 120 are controlled in a consolidated manner, power converter 110 can suppress deficiency and excess of stored energy in each converter cell 7 of power converter 110 and imbalance in stored energy with power converter 120 while outputting AC power Pac1 that follows AC power command value Pac*. Power converter 120 can suppress deficiency and excess of stored energy in each converter cell 7 of power converter 120 and imbalance in stored energy with power converter 110 while changing AC power Pac2 so that the total sum of AC power Pac1, AC power Pac2, and DC power Pdc becomes zero to follow a change of AC power Pac1 and DC power Pdc.

### [Effects of First Embodiment]

As described above, in power conversion system 100 according to the first embodiment, control system 130 is configured to control AC power Pac1 output from power converter 110 in accordance with AC power command value Pac* and to feed forward AC power Pac1 and DC power Pdc output from power conversion system 100. With such a configuration, AC power Pac2 can quickly respond to an abrupt change of AC power Pac1 due to a disturbance such as a system fault. As a result, the stored energy in the entire power conversion system 100 can be maintained even in the event of a disturbance.

In the above configuration, control system 130 controls power converters 110 and 120 so as to suppress deficiency and excess of stored energy in all converter cells 7 of power converters 110 and 120. This can alleviate the influence of a disturbance on capacitor voltage Vc of each converter cell 7, thereby maintaining energy stored in capacitors 32 of all converter cells 7 of power converters 110 and 120.

Even when the stored energy in all converter cells 7 of power converters 110 and 120 is maintained, imbalance in stored energy may occur between power converter 110 and power converter 120. In the above configuration, therefore, control system 130 is configured to further perform control for equalizing the level of capacitor voltages Vc of all converter cells 7 between power converters 110 and 120. This allows fluctuations of stored energy due to a disturbance to be shared in the entire power conversion system 100, thereby suppressing variations of capacitor voltage Vc in the entire power conversion system 100.

### [Modification of First Embodiment]

(1) In the foregoing first embodiment, a configuration in which AC power Pac2 is changed so as to follow a change of AC power Pac1 output to AC system 1 has been described. However, AC power Pac2 may change due to a disturbance in AC system 2. In such a case, it is requested that AC power Pac1 should be changed so as to follow the change of AC power Pac2. In order to do so, it is necessary to reflect the change of AC power Pac2 in the control of power converter 110.

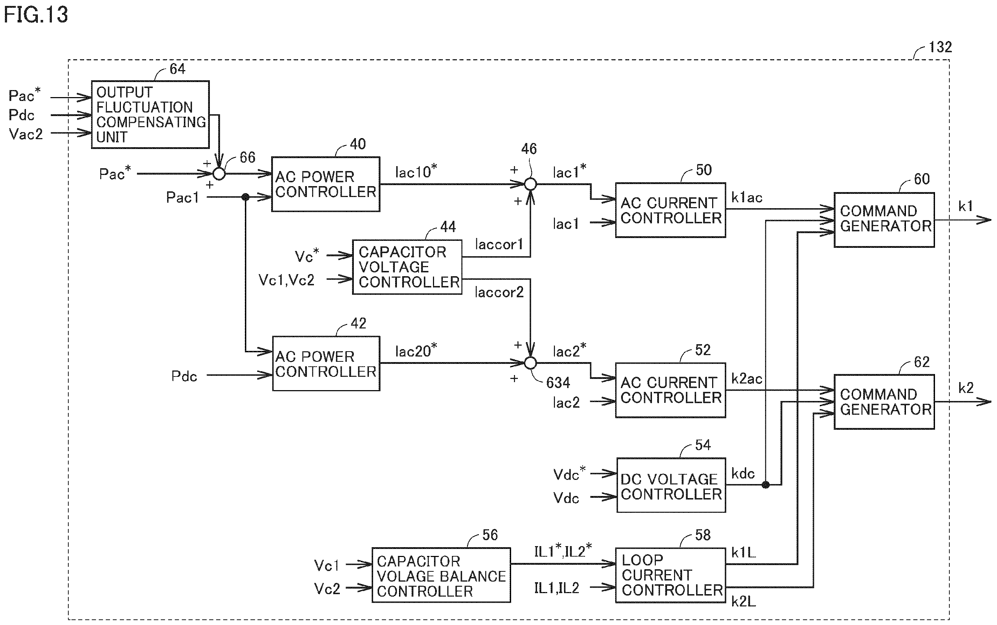

Fig. 13 is a block diagram illustrating a configuration example of basic control unit 132 according to a first modification of the first embodiment. Basic control unit 132 according to the present modification differs from basic control unit 132 shown in Fig. 7 in that it includes an output fluctuation compensator 64 and an adder 66.

Output fluctuation compensator 64 corrects AC power command value Pac* so as to subtract the excess ((Pac*+Pdc)-Pac2) of the total value of AC power command value Pac* and DC power Pdc over AC power Pac2 capable of being output, from AC power command value Pac*. The AC power Pac2 capable of being output is calculated based on AC voltage Vac2. The method of calculating the AC power Pac2 capable of being output is not limited to the example above. The amount of fluctuations of AC power Pac2 can be calculated by any method.

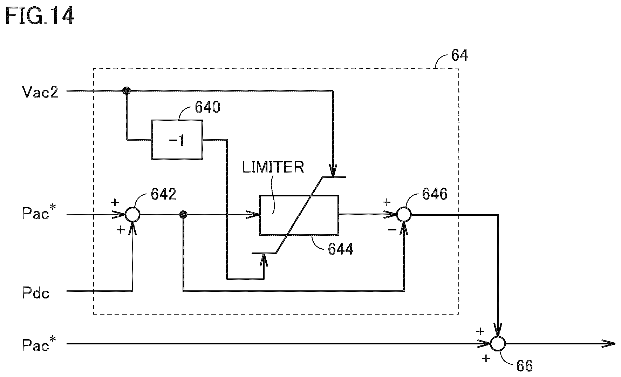

Fig. 14 is a block diagram illustrating a specific configuration example of output fluctuation compensator 64 shown in Fig. 13. As shown in Fig. 14, output fluctuation compensator 64 includes a multiplier 640, an adder 642, a limiter 644, and a subtracter 646.

Multiplier 640 multiplies AC voltage Vac2 by a gain "-1". Multiplier 640 and limiter 644 calculate the AC power Pac2 capable of being output, based on AC voltage Vac2. Subtracter 646 subtracts the total value of AC power command value Pac* and DC power Pdc from the AC power Pac2 capable of being output that is calculated by limiter 644, and outputs a subtraction result to adder 66.

According to the present embodiment, AC power command value Pac* is corrected so that the amount of fluctuation of AC power Pac2 is compensated in response to a change of the AC power Pac2 capable of being output. Thus, the stored energy in each converter cell 7 in power converters 110 and 120 can be maintained for not only an abrupt change of AC power Pac1 but also an abrupt change of AC power Pac2.

(2) When another power conversion system or a power source for maintaining DC voltage Vdc at a predetermined value is connected to DC system 3 in power conversion system 100 shown in Fig. 1, DC power Pdc output from power conversion system 100 to DC system 3 exhibits a positive or negative value. In such a case, as shown in Fig. 14, the configuration may include a DC current controller 68 instead of DC voltage controller 54 in order to control DC power Pdc.

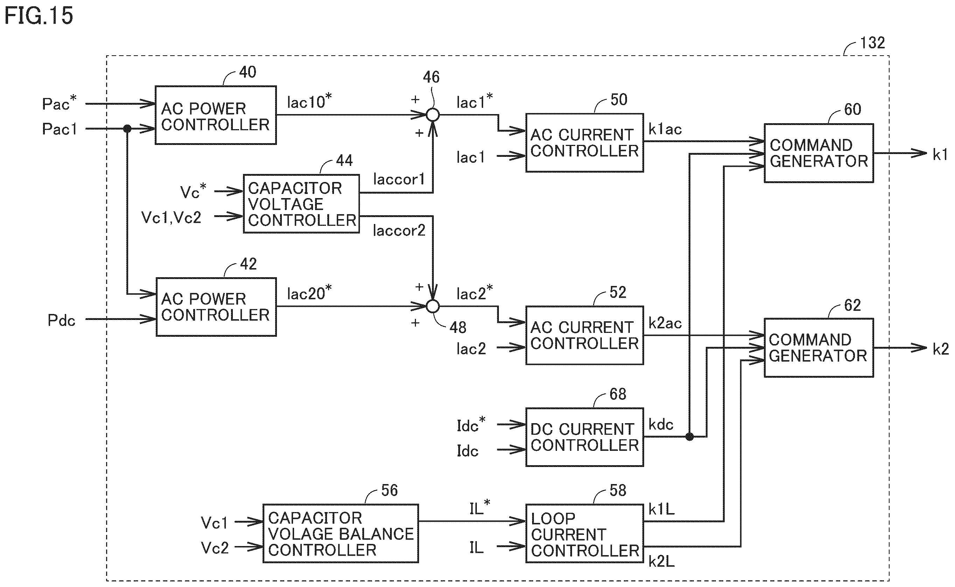

Fig. 15 is a block diagram illustrating a configuration example of basic control unit 132 according to a second modification of the first embodiment. Basic control unit 132 according to the present modification differs from basic control unit 132 shown in Fig. 7 in that it includes DC current controller 68 instead of DC voltage controller 54. As shown in Fig. 15, DC current controller 68 generates DC voltage command value kdc that is a command value of DC voltage output from power converters 110 and 120, through feedback control for reducing a deviation between DC current Idc and DC current command value Idc* to zero. DC current Idc is detected by DC current detector 17. DC current command value Idc* is a value preset by a system operator or the like.

(3) In the foregoing first embodiment, AC power controller 42 is configured to generate AC current command value Iac20* by multiplying the addition value (Pac1+Pdc) of AC power Pac1 and DC power Pdc by a feedforward gain. However, AC power Pac1 input to AC power controller 42 may be a value obtained by filtering AC power Pac1 calculated based on AC voltage Vac1 and AC current Iac1 shown in Fig. 2.

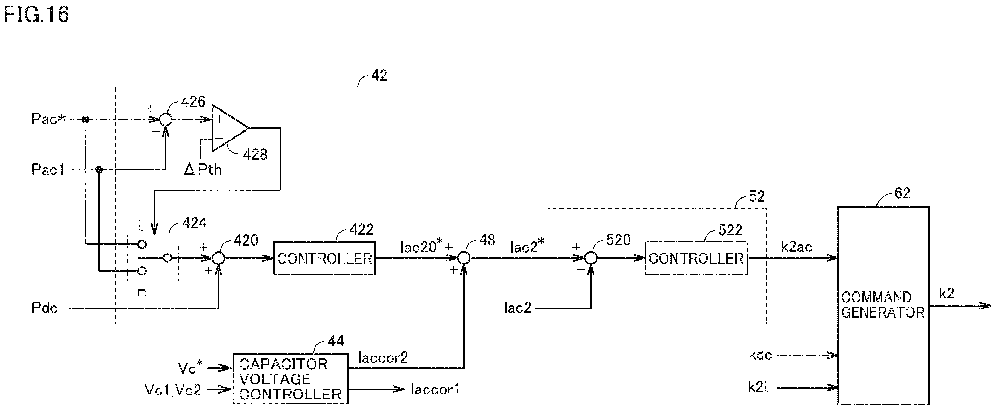

Alternatively, as shown in Fig. 16, AC power controller 42 may be configured to selectively use AC power command value Pac* and AC power Pac1 in accordance with the magnitude of a deviation of AC power Pac1 from AC power command value Pac*. Fig. 16 is a block diagram illustrating a configuration example of AC power controller 42 included in basic control unit 132 according to a third modification of the first embodiment. As shown in Fig. 16, AC power controller 42 includes a subtracter 426, a comparator 428, a switching circuit 424, an adder 420, and a controller 422.

Subtracter 426 subtracts AC power Pac1 from AC power command value Pac*. Comparator 428 compares deviation ΔPac1 between AC power command value Pac* and AC power Pac1 with a predetermined threshold value ΔPth and outputs a signal indicating a comparison result. Comparator 428 outputs an L (logic low) level signal when deviation ΔPac1 is equal to or smaller than deviation ΔPac1, and outputs an H (logic high) level signal when deviation ΔPac1 is greater than deviation ΔPac1.

Switching circuit 424 inputs AC power command value Pac* to adder 420 in response to an L-level output signal from comparator 428. Switching circuit 424 inputs AC power Pac1 to adder 420 in response to an H-level output signal from comparator 428.

In the present modification, when deviation ΔPac1 of AC power Pac1 from AC power command value Pac* is equal to or smaller than threshold value ΔPth, AC power controller 42 generates AC current command value Iac20* in accordance with AC power command value Pac* and DC power Pdc. On the other hand, when deviation ΔPac1 is smaller than threshold value ΔPth, AC power controller 42 generates AC current command value Iac20* in accordance with AC power Pac1 and DC power Pdc.

In this way, when AC system 1 is stable and there is almost no disturbance in AC power controller 40, AC current command value Iac20* is generated using AC power command value Pac*, thereby realizing quick control of AC power Pac2. On the other hand, when a disturbance occurs in AC power controller 40, AC current command value Iac20* is generated using AC power Pac, thereby quickly responding even to a change of AC power Pac1.

(4) In power conversion system 100 shown in Fig. 1, as the distance between power converter 110 and power converter 120 increases, the influence of impedance of the DC transmission line that couples power converter 110 and power converter 120 becomes not negligible. In such a case, an impedance difference occurs between a current path in the inside of each power converter and a current path between power converters 110 and 120, and it is therefore desirable to separately control loop current circulating through the inside of each power converter and loop current flowing through the current path between power converters 110 and 120.

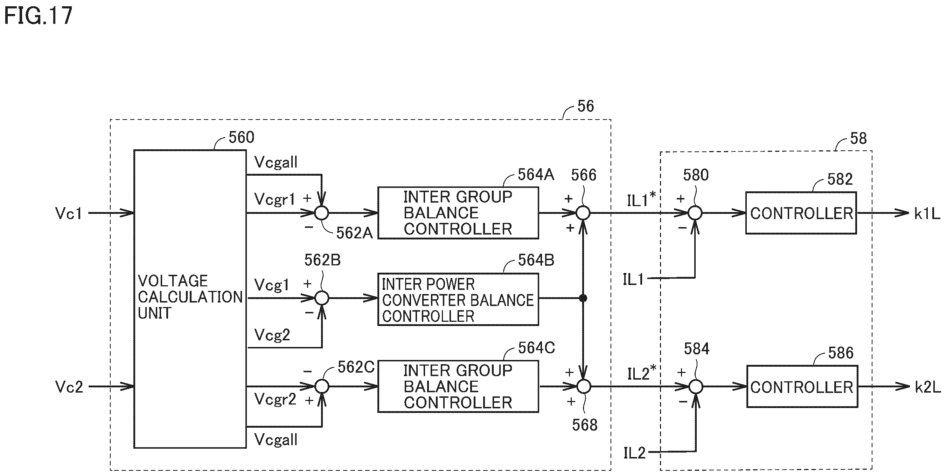

Fig. 17 is a block diagram illustrating a specific configuration example of capacitor voltage balance controller 56 and circulating current controller 58 included in basic control unit 132 according to a fourth modification of the first embodiment. As shown in Fig. 17, capacitor voltage balance controller 56 includes voltage calculation unit 560, subtracters 562A to 562C, inter group balance controllers 564A and 564C, an inter power converter balance controller 564B, and adders 566 and 568.

Voltage calculation unit 560 receives capacitor voltage Vc1 detected by voltage detector 33 in each converter cell 7 of power converter 110, and capacitor voltage Vc2 detected by voltage detector 33 in each converter cell 7 of power converter 120.

Voltage calculation unit 560 generates group voltage evaluation value Vcgr1 indicating the total sum of stored energy of capacitors 32 of converter cells 7 for each group (arm) in power converter 110. Voltage calculation unit 560 also generates group voltage evaluation value Vcgr2 indicating the total sum of stored energy of capacitors 32 of converter cells 7 for each group (arm) in power converter 120.

Voltage calculation unit 560 generates all voltage evaluation value Vcgall for evaluating the total sum of stored energy of all converter cells 7 of power converters 110 and 120, from capacitor voltages Vc1 of all converter cells 7 of power converter 110 and capacitor voltages Vc2 of all converter cells 7 of power converter 120. All voltage evaluation value Vcgall is obtained as an average value of capacitor voltages Vc of all converter cells 7 of power converters 110 and 120.

Voltage calculation unit 440 generates voltage evaluation value Vcg1 indicating the total sum of stored energy of all converter cells 7 of power converter 110, from capacitor voltage Vc1 of each converter cell 7 of power converter 110. Voltage evaluation value Vcg1 is obtained as an average value, total value, or representative value of capacitor voltages Vc1 of all converter cells 7 of power converter 110. As the representative value, a median, maximum, minimum, or the like of capacitor voltages Vc1 of all converter cells 7 can be employed as appropriate.

Voltage calculation unit 440 further generates voltage evaluation value Vcg2 indicating the total sum of stored energy of all converter cells 7 of power converter 120, from capacitor voltage Vc2 of each converter cell 7 of power converter 120. Voltage evaluation value Vcg2 may be obtained as an average value, total value, or representative value of capacitor voltages Vc2 of all converter cells 7 of power converter 120. As the representative value, a median, maximum, minimum, or the like of capacitor voltages Vc2 of all converter cells 7 can be employed as appropriate.

Subtracter 562A subtracts group voltage evaluation value Vcgr1 from all voltage evaluation value Vcgall. Inter group balance controller 564A executes control computation so that a deviation of group voltage evaluation value Vcgr1 from all voltage evaluation value Vcgall becomes zero, and generates a first current command value as a control computation result. The first current command value corresponds to a loop current value for equalizing the level of capacitor voltages Vc1 of converter cells 7 between the groups of power converter 110 and eliminating imbalance in stored energy in converter cells 7 between the groups. Inter group balance controller 564A corresponds to an embodiment of "first balance controller".

Subtracter 562C subtracts group voltage evaluation value Vcgr2 from all voltage evaluation value Vcgall. Inter group balance controller 564C executes control computation so that a deviation of group voltage evaluation value Vcgr2 from all voltage evaluation value Vcgall becomes zero, and generates a second current command value as a control computation result. The second current command value corresponds to a loop current value for equalizing the level of capacitor voltages Vc2 of converter cells 7 between the groups of power converter 120 and eliminating imbalance in stored energy in converter cells 7 between the groups. Inter group balance controller 564C corresponds to an embodiment of "second balance controller".

Subtracter 562B subtracts voltage evaluation value Vcg2 from voltage evaluation value Vcg1. Inter power converter balance controller 564B executes control computation so that a deviation between voltage evaluation value Vcg1 and voltage evaluation value Vcg2 becomes zero, and generates a third current command value as a control computation result. The third current command value corresponds to a loop current value for equalizing the level of capacitor voltages Vc in converter cells 7 between power converters 110 and 120 and eliminating imbalance in stored energy in converter cells 7 between power converters 110 and 120. Inter power converter balance controller 564B corresponds to an embodiment of "third balance controller".

Adder 566 adds the first current command value from inter group balance controller 564A and the third current command value from inter power converter balance controller 565B to generate loop current command value IL1*. Adder 568 adds the second current command value from inter group balance controller 564C and the third current command value from inter power converter balance controller 564B to generate loop current command value IL*.

Loop current controller 58 includes subtracters 580 and 584, and controllers 582 and 586. Subtracter 580 subtracts loop current IL1 circulating through the inside of power converter 110 from loop current command value IL1*. Controller 582 executes control computation so that a deviation of loop current IL1 from loop current command value IL1* becomes zero, and generates loop control command value k1L as a control computation result. Subtracter 584 subtracts loop current IL2 circulating through the inside of power converter 120 from loop current command value IL2*. Controller 586 executes control computation so that a deviation of loop current IL2 from loop current command value IL2* becomes zero, and generates loop control command value k2L as a control computation result. Controllers 582 and 586 may be configured as a PI controller that performs proportional computation and integral computation for a deviation or may be configured as a PID controller that additionally performs differential computation. Alternatively, another configuration of a controller for use in feedback control may be used. Alternatively, controllers 582 and 586 may be a combination of feedback controller and feedforward controller.

In this way, capacitor voltage balance controller 56 controls loop current using voltage evaluation values Vcgall, Vcgr1, and Vcgr2 to suppress imbalance in stored energy in a plurality of converter cell 7 for each group in each power converter and suppress imbalance in stored energy between power converters 110 and 120.

### Second Embodiment.

In power conversion system 100 shown in Fig. 1, when AC system 1 is interconnected with a synchronous generator, the synchronous generator maintains AC voltage Vac1 of AC system 1 in an appropriate range. Control device 130 therefore can control AC powers Pac1 and Pac2 by controlling AC currents Iac1 and Iac2 respectively output from power converters 110 and 120.

On the other hand, when a synchronous generator is not interconnected with AC system 1, control system 130 is configured to control the operation of power converter 110 so as to keep AC voltage Vac1 of AC system 1 in an appropriate range, as described below.

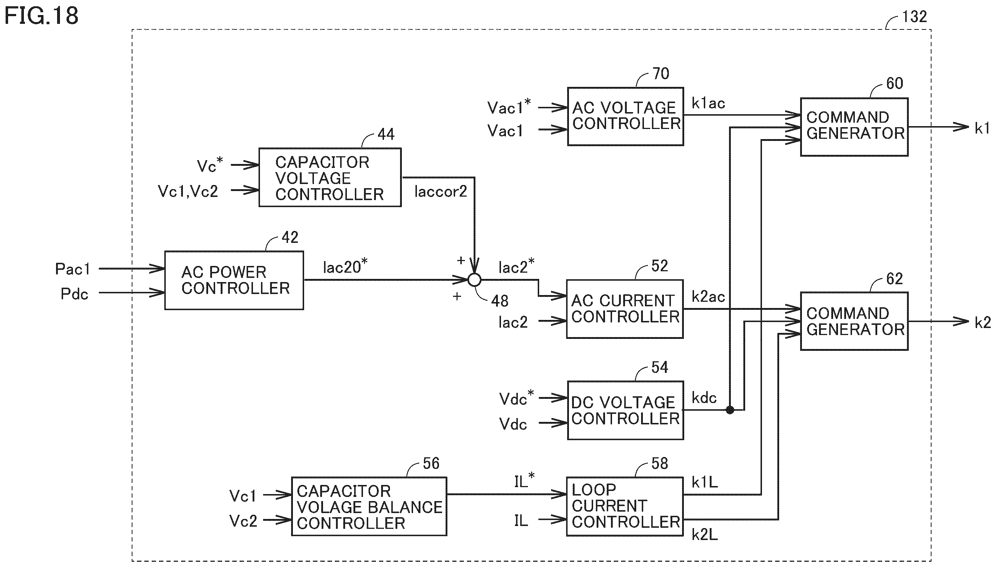

Fig. 18 is a block diagram illustrating a configuration example of basic control unit 132 in power conversion system 100 according to a second embodiment. Basic control unit 132 shown in Fig. 18 differs from basic control unit 132 shown in Fig. 7 in that it includes an AC voltage controller 70 instead of AC power controller 40, adder 46, and AC current controller 50.

AC voltage controller 70 generates AC voltage command value k1ac that is a command value of AC voltage output from power converter 110, through feedback control for reducing deviation ΔVac1 between AC voltage Vac1 of AC system 1 and AC voltage command value Vac1* that is a command value of AC voltage of AC system 1 to zero. AC voltage command value Vac1* is a value preset by a system operator or the like.

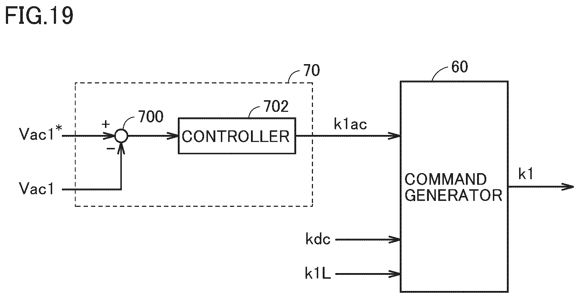

Fig. 19 is a block diagram illustrating a specific configuration example of AC voltage controller 70 shown in Fig. 18. As shown in Fig. 19, AC voltage controller 70 includes a subtracter 700 and a controller 702.

Subtracter 700 subtracts AC voltage Vac from AC voltage command value Vac1*. Controller 702 executes control computation so that deviation ΔVac1 between AC voltage command value Vac1* and AC voltage Vac1 that is calculated by subtracter 700 becomes zero, and outputs AC voltage command value k1ac* as a control computation result. Controller 402 may be configured as a PI controller that performs proportional computation and integral computation for deviation ΔVac1 or may be configured as a PID controller that additionally performs differential computation. Alternatively, another configuration of a controller for use in feedback control may be used. Alternatively, controller 702 may be a combination of feedback controller and feedforward controller.

Returning to Fig. 18, in power conversion system 100 according to the second embodiment, AC voltage Vac1 of AC system 1 can be kept in an appropriate range, through voltage control in power converter 110. On the other hand, since AC current Iac1 output from power converter 110 fluctuates depending on a load or a power source interconnected with AC system 1, the control of AC current Iac1 by control system 130 is difficult.

Then, in basic control unit 132 shown in Fig. 18, capacitor voltage controller 44 is configured to add AC current command correction value Iaccor2 only to command value Iac20* of AC current output from power converter 120.

Even in the second embodiment, the level of capacitor voltages Vc of converter cells 7 is equalized between power converters 110 and 120 by capacitor voltage balance controller 56, so that imbalance in stored energy in converter cells 7 between power converters 110 and 120 can be reduced.

### Third Embodiment.

In the foregoing first and second embodiments, a configuration of control system 130 in a case where power conversion system 100 is adapted to an HVDC system or a BTB system has been described.

In a third embodiment, a configuration of control system 130 in a case where power conversion system 100 is adapted to an AC/DC conversion system that performs bidirectional power conversion between an AC system and a DC system will be described.

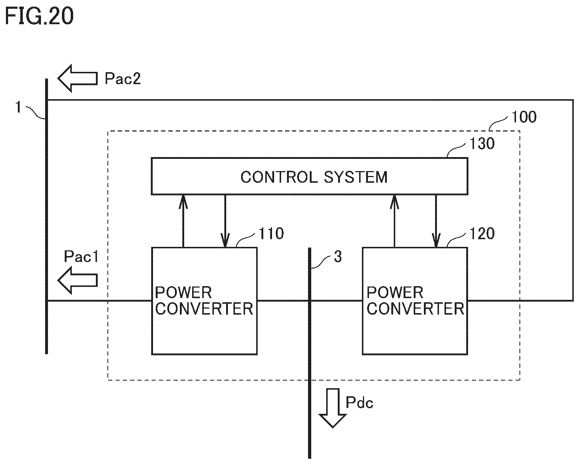

Fig. 20 is a block diagram showing a configuration of a power conversion system according to the third embodiment. Power conversion system 100 shown in Fig. 20 differs from power conversion system 100 shown in Fig. 1 in that power converter 120 is connected between AC system 1 and DC system 3.

Specifically, in power conversion system 100 according to the third embodiment, power converter 110 and power converter 120 are connected in parallel between AC system 1 and DC system 3. Thus, power conversion system 100 can be regarded as an AC/DC conversion system with increased DC current capacity. Power converters 110 and 120 are connected in parallel to AC system 1 and operated and thereby can be adapted to power conversion of large current that is feasibly difficult with a single power converter.

In the third embodiment, similar to the first embodiment, control system 130 controls the operation of power converters 110 and 120 in a consolidated manner so that the total sum of AC power Pac1 output from power converter 110, DC power Pdc output to DC system 3, and AC power Pac2 output from power converter 120 becomes zero. Thus, power converters 110 and 120 can operate stably without interfering with each other. Further, since the stored energy in the entire power conversion system 100 can be maintained, the operation of power conversion system 100 can be continued.

For example, it is assumed that power conversion system 100 converts DC power applied from DC system 3 into AC power, which is in turn supplied to AC system 1. Assuming that power loss that occurs in power conversion system 100 is zero, in order to maintain energy stored in capacitors 32 of power converters 110 and 120, it is requested that the sum of AC power Pac1 (Pac1 is positive) output from power converter 110 to AC system 1 and AC power Pac2 (Pac2 is positive) output from power converter 120 to AC system 1 should balance with DC power Pdc (Pdc is negative) input from DC system 3. This means that Pac1+Pac2+Pdc=0 holds among Pac1, Pac2, and Pdc.

### [Configuration of Control System]

An internal configuration of control system 130 shown in Fig. 20 will now be described.

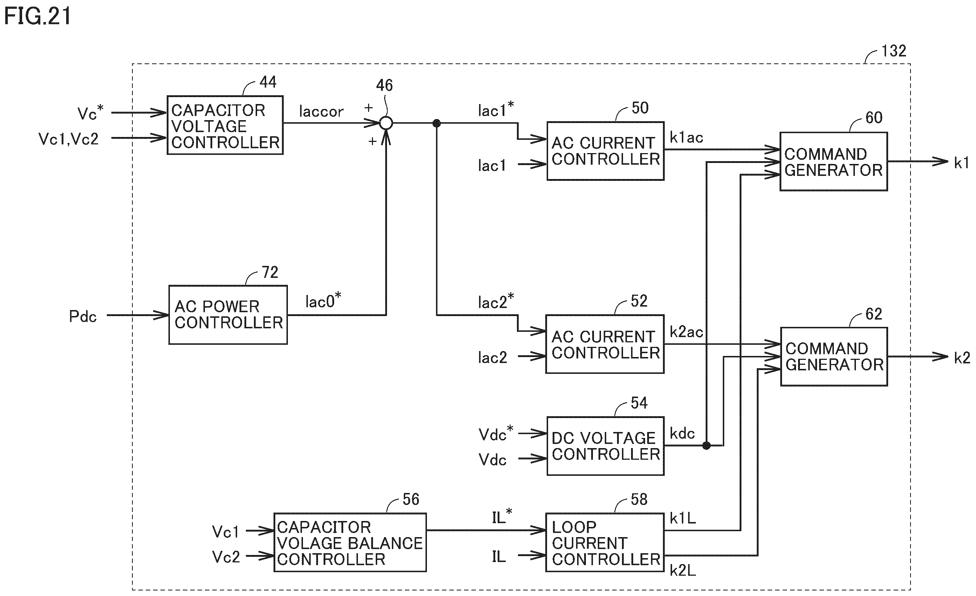

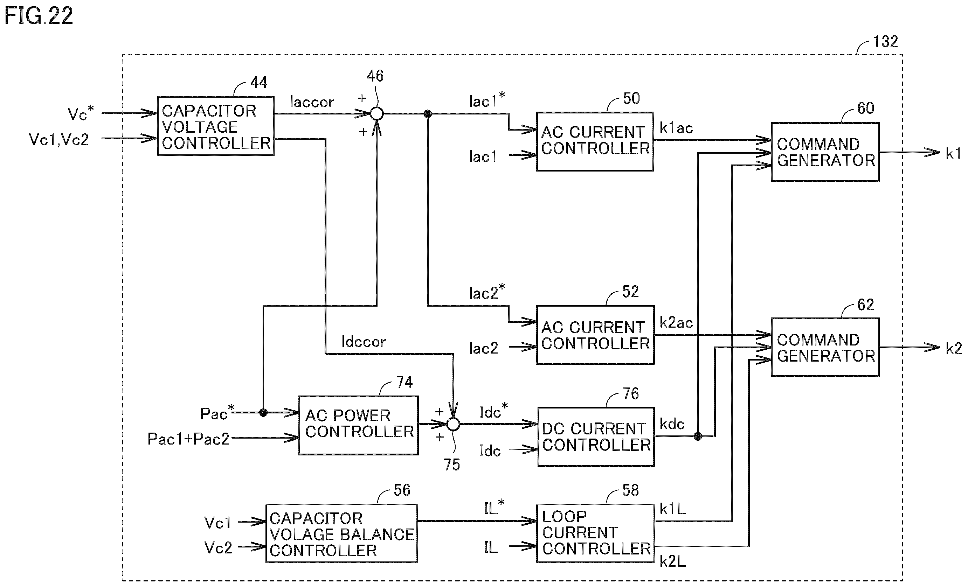

Control device 130 according to the third embodiment differs from control system 130 shown in Fig. 6 in the internal configuration of basic control unit 132. The internal configuration of basic control unit 132 can be designed in accordance with the functions served by power conversion system 100. A configuration example (see Fig. 21) of basic control unit 132 in a case where power conversion system 100 serves the function of stabilizing DC voltage Vdc of DC system 3 and a configuration example (see Fig. 22) of basic control unit 132 in a case where power conversion system 100 serves the function of outputting a desired AC power to AC system 1 will be described below.

### (First Configuration Example of Basic Control Unit 132)

Fig. 21 is a block diagram illustrating a first configuration example of basic control unit 132 in control system 130 shown in Fig. 20. Basic control unit 132 shown in Fig. 21 differs from basic control unit 132 shown in Fig. 7 in that it includes an AC power controller 72 instead of AC power controllers 40 and 42.

AC power controller 72 feeds forward DC power Pdc output from power converters 110 and 120 to generate AC current command value Iac0* that is a command value of AC current output from power converters 110 and 120. The feedforward of DC power Pdc is performed in order to improve the responsivity of AC powers Pac1 and Pac2 to fluctuations of DC power Pdc output from power conversion system 100 to DC system 3.

Capacitor voltage controller 44 generates voltage evaluation value Vcgall for evaluating the total sum of stored energy of all converter cells 7 of power converters 110 and 120. Capacitor voltage controller 44 generates AC current command correction value Iaccor for correcting AC current command value Iac0* for power converters 110 and 120, through feedback control for reducing a deviation between voltage evaluation value Vcgall and all voltage command value Vc* to zero.

Adder 46 adds AC current command correction value Iaccor to AC current command value Iac0* to generate AC current command values Iac1* and Iac2*. In other words, AC current command value Iac1* matches with AC current command value Iac2*.

AC current controller 50 generates AC voltage command value k1ac that is a command value of AC voltage output from power converter 110, through feedback control for reducing a deviation between AC current command value Iac1* and AC current Iac1 detected by AC current detector 16 to zero.

AC current controller 52 generates AC voltage command value k2ac that is a command value of AC voltage output from power converter 120, through feedback control for reducing a deviation between AC current command value Iac2* and AC current Iac2 detected by AC current detector 16 to zero.

DC voltage controller 54 generates DC voltage command value kdc that is a command value of DC voltage output from power converters 110 and 120, through feedback control for reducing a deviation between DC voltage Vdc and DC voltage command value Vdc* to zero. DC voltage Vdc is a voltage obtained from DC voltages Vdcp and Vdcn detected by DC voltage detectors 11A and 11B (Vdc=Vdcp-Vdcn). DC voltage command value Vdc* is a value preset by a system operator or the like.

Capacitor voltage balance controller 56 receives capacitor voltage Vc1 detected by voltage detector 33 of each converter cell 7 of power converter 110, and capacitor voltage Vc2 detected by voltage detector 33 of each converter cell 7 of power converter 120. Capacitor voltage balance controller 56 generates loop current command value IL* so as to eliminate imbalance between the stored energy in converter cells 7 of each group (each arm) of power converter 110 and the stored energy in converter cells 7 of each group (each arm) of power converter 120.

Loop current controller 58 generates loop control command values k1L and k2L for controlling loop current IL to follow loop current command value IL*.

Command generator 60 combines AC voltage command value k1ac generated by AC current controller 50, DC voltage command value kdc generated by DC voltage controller 54, and loop control command value k1L generated by loop current controller 58 to generate arm voltage command value k1 for power converter 110.

Command generator 62 combines AC voltage command value k2ac generated by AC current controller 52, DC voltage command value kdc generated by DC voltage controller 54, and loop control command value k2L generated by loop current controller 58 to generate arm voltage command value k2 for power converter 120.

As described above, control system 130 is configured to control DC voltage Vdc of DC system 3 in accordance with DC voltage command value Vdc* and to feed forward DC power Pdc. In this configuration, since AC powers Pac1 and Pac2 can promptly respond to an abrupt change of DC power Pdc due to a disturbance of DC system 3, the stored energy in the entire power conversion system 100 can be maintained.

Further, in the above configuration, since control system 130 is configured to perform control for equalizing the level of capacitor voltages Vc of all converter cells 7 between power converters 110 and 120, variations of capacitor voltage Vc in the entire power conversion system 100 can be suppressed.

### (Second Configuration Example of Basic Control Unit 132)

Fig. 22 is a block diagram illustrating a second configuration example of basic control unit 132 in control system 130 shown in Fig. 20. Basic control unit 132 shown in Fig. 22 differs from basic control unit 132 shown in Fig. 7 in that it includes an AC power controller 74, an adder 75, and a DC current controller 76 instead of AC power controllers 40 and 42, and DC voltage controller 54.

AC power controller 74 generates DC current command value Idc* that is a command value of DC current output from power converters 110 and 120 to DC system 3, through feedback control for reducing a deviation between the sum (Pac1+Pac2) of AC power Pac1 output from power converter 110 and AC power Pac2 output from power converter 120, and AC power command value Pac* to zero. AC power Pac1 is calculated based on AC voltage Vac1 and AC current Iac1 shown in Fig. 2. AC power Pac2 is calculated based on AC voltage Vac2 and AC current Iac2.

Capacitor voltage controller 44 generates voltage evaluation value Vcgall for evaluating the total sum of stored energy of all converter cells 7 of power converters 110 and 120. Capacitor voltage controller 44 generates AC current command correction value Iaccor for correcting AC current command value Iac0* for power converters 110 and 120, and DC current command value Idccor for correcting DC current command value Idc*, through feedback control for reducing a deviation between voltage evaluation value Vcgall and all voltage command value Vc* to zero. Adder 75 adds DC current command value correction value Idccor to DC current command value Idc* from AC power controller 74 to correct DC current command value Idc*.

DC current controller 76 generates DC voltage command value kdc that is a command value of DC voltage output from power converters 110 and 120, through feedback control for reducing a deviation between DC current Idc and the corrected DC current command value Idc* to zero. DC current Idc is detected by DC current detector 17.

Adder 46 adds AC current command correction value Iaccor to AC power command value Pac* to generate AC current command values Iac1* and Iac2*. In other words, AC current command value Iac1* matches with AC current command value Iac2*.

AC current controller 50 generates AC voltage command value k1ac that is a command value of AC voltage output from power converter 110, through feedback control for reducing a deviation between AC current command value Iac1* and AC current Iac1 detected by AC current detector 16 to zero.

AC current controller 52 generates AC voltage command value k2ac that is a command value of AC voltage output from power converter 120, through feedback control for reducing a deviation between AC current command value Iac2* and AC current Iac2 detected by AC current detector 16 to zero.

DC voltage controller 54 generates DC voltage command value kdc that is a command value of DC voltage output from power converters 110 and 120, through feedback control for reducing a deviation between DC voltage Vdc and DC voltage command value Vdc* to zero.

Capacitor voltage balance controller 56 receives capacitor voltage Vc1 detected by voltage detector 33 of each converter cell 7 of power converter 110, and capacitor voltage Vc2 detected by voltage detector 33 of each converter cell 7 of power converter 120. Capacitor voltage balance controller 56 generates loop current command value IL* so as to eliminate imbalance between the stored energy in converter cells 7 of each group (each arm) of power converter 110 and the stored energy in converter cells 7 in each group (each arm) of power converter 120.

Loop current controller 58 generates loop control command values k1L and k2L for controlling loop current IL to follow loop current command value IL*.

Command generator 60 combines AC voltage command value k1ac generated by AC current controller 50, DC voltage command value kdc generated by DC voltage controller 54, and loop control command value k1L generated by loop current controller 58 to generate arm voltage command value k1 for power converter 110.

Command generator 62 combines AC voltage command value k2ac generated by AC current controller 52, DC voltage command value kdc generated by DC voltage controller 54, and loop control command value k2L generated by loop current controller 58 to generate arm voltage command value k2 for power converter 120.

### (Modification of Second Configuration Example of Basic Control Unit 132)

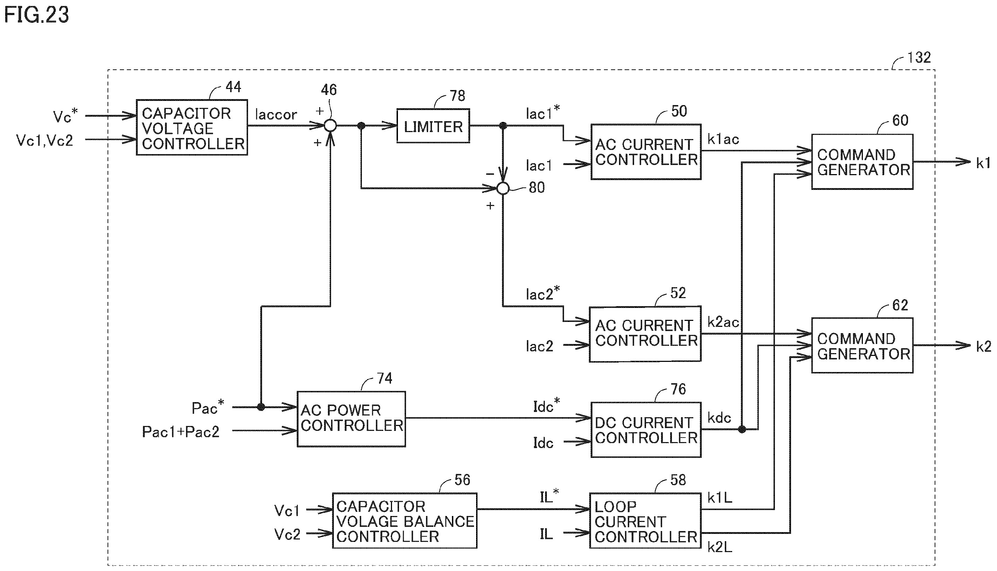

Fig. 23 is a block diagram illustrating a modification of the second configuration example of basic control unit 132 shown in Fig. 22. Basic control unit 132 shown in Fig. 23 differs from basic control unit 132 shown in Fig. 22 in that it includes a limiter 78 and a subtracter 80.

Limiter 78 is provided between adder 46 and AC current controller 50. Subtracter 80 is provided between limiter 78 and AC current controller 52. Adder 46 adds AC current command correction value Iaccor to AC power command value Pac* to generate AC current command value Iac0*.

Limiter 78 limits AC current command value Iac0* within a range in accordance with a preset AC current limit value Imax. AC current limit value Imax is set to a permissible current value of power converter 110. Specifically, when AC current command value Iac0* deviates from a range based on AC current limit value Imax (that is, lower limit: -Imax, upper limit: +Imax), limiter 78 limits AC current command value Iac0* to the lower limit (-Imax) or the upper limit (+Imax).

AC current command value Iac0* limited by limiter 78 is applied as AC current command value Iac1* to AC current controller 50. AC current controller 50 generates AC voltage command value k1ac that is a command value of AC voltage output from power converter 110, through feedback control for reducing a deviation between AC current command value Iac1* and AC current Iac1 detected by AC current detector 16 to zero.

Subtracter 80 subtracts AC current command value Iac1* from AC current command value Iac0* to generate AC current command value Iac2*. AC current controller 52 generates AC voltage command value k2ac that is a command value of AC voltage output from power converter 120, through feedback control for reducing a deviation between AC current command value Iac2* and AC current Iac2 detected by AC current detector 16 to zero.

In the configuration described above, the deviation (Iac0*-Iac1*) between AC current command value Iac0* and AC current command value Iac1* that is calculated by subtracter 80 corresponds to the limitation amount on AC current command value Iac0* by limiter 78. When AC current command value Iac0* falls within a range based on AC current limit value Imax, limiter 78 does not limit AC current command value Iac0*, and Iac0*=Iac1 *. In this case, since the deviation (Iac0*-Iac1*) is zero, AC current command value Iac2* is zero.

On the other hand, when AC current command value Iac0* deviates from a range based on AC current limit value Imax, AC current command value Iac1* is limited to the lower limit (-Imax) or the upper limit (+Imax). In this case, the deviation (Iac0*-Iac1*) is AC current command value Iac2*.

According to the present modification, in a case where AC current command value Iac0* has a positive value, that is, in a case where AC power is output from power converters 110 and 120 to AC system 1, when AC current command value Iac0* is equal to or smaller than the permissible current value of power converter 110, AC current Iac1 that matches with AC current command value Iac0* is output from power converter 110, and AC current Iac2 output from power converter 120 is zero.

On the other hand, when AC current command value Iac0* exceeds the permissible current value of power converter 110, AC current Iac1 equal to the permissible current value is output from power converter 110, and AC current Iac2 corresponding to the excess of AC current command value Iac0* over the permissible current value is output from power converter 120.

The configuration shown in Fig. 23 is applicable to the first configuration example shown in Fig. 21.

### Fourth Embodiment.

In the foregoing first to third embodiments, a configuration in which power converters 110 and 120 are MMC converters has been described. However, power converters 110 and 120 are not limited to this configuration. In a fourth embodiment, a configuration example in which power converters 110 and 120 are two-level converters will be described.

### <Overall Configuration of Power Conversion System>

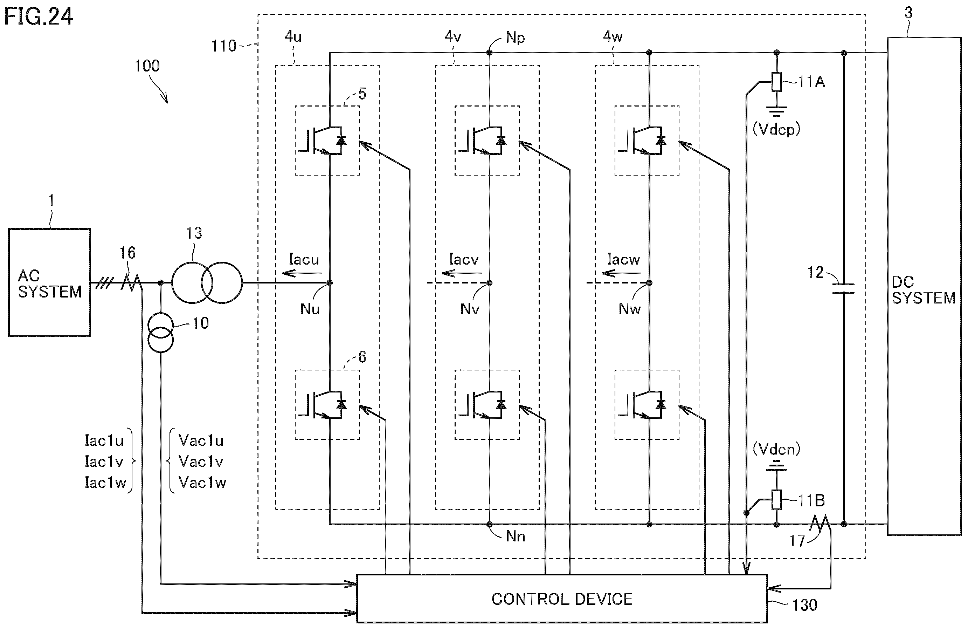

Fig. 24 is an overall configuration diagram of power conversion system 100 according to the fourth embodiment. As shown in Fig. 24, power converters 110 and 120 are AC/DC converters, which are also called two-level converters.

In power converter 110, 120 shown in Fig. 24, each of three leg circuits 4u, 4v, and 4w includes upper arm 5 and lower arm 6. Upper arm 5 and lower arm 6 are configured such that a self-turn-off switching element capable of controlling both ON operation and OFF operation is connected in antiparallel with a freewheeling diode (FWD). For example, a semiconductor switching element such as IGBT, GCT, or MOSFET is used as the switching element. Power storage element 12 is connected between high potential DC terminal Np and low potential DC terminal Nn. A capacitor is used as energy storage element 12. Power storage element 12 may hereinafter be called "capacitor".

### <Functional Configuration Example of Control System>

A configuration of control system 130 according to the fourth embodiment will now be described.

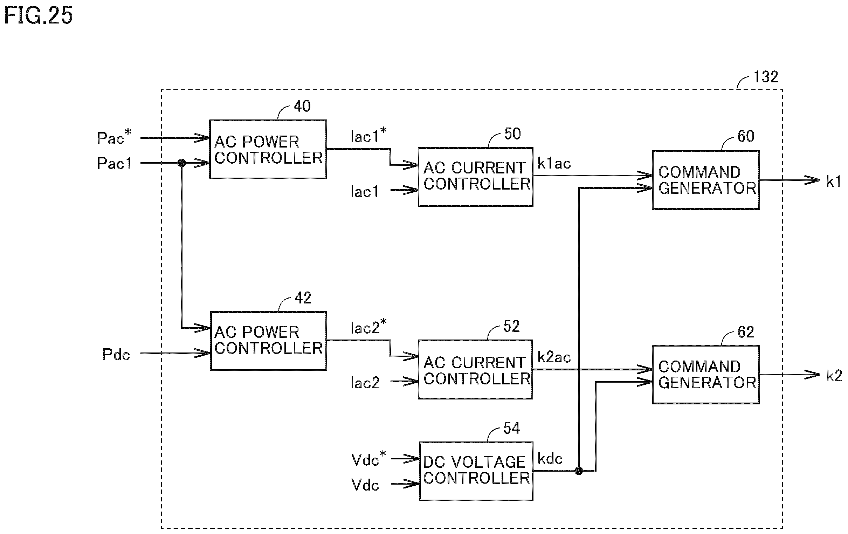

The hardware configuration of control system 130 according to the fourth embodiment is the same as the hardware configuration shown in Fig. 5. Control device 130 according to the fourth embodiment differs from control system 130 shown in Fig. 6 in the configuration of basic control unit 132. Fig. 25 is a block diagram illustrating a configuration example of basic control unit 132 in control system 130 according to the fourth embodiment. In the following description, it is assumed that each signal is expressed in terms of PU in the inside of control system 130.

In basic control unit 132 shown in Fig. 25, capacitor voltage controller 44, adders 46 and 48, capacitor voltage balance controller 56, and loop current controller 58 are excluded from basic control unit 132 shown in Fig. 7.

In the fourth embodiment, control system 130 is also configured to control output power Pac1 of power converter 110 in accordance with AC power command value Pac* and to feed forward output power Pac1 and DC power Pdc so that the total sum of output power Pac1, output power Pac2, and DC power Pdc becomes zero. With such a configuration, output power Pac2 can quickly respond when output power Pac1 abruptly changes due to a fault of AC system 1 or the like.

The configuration described above as an embodiment is an example of the configuration of the present disclosure, and can be combined with another known technique or may be implemented with the processing and configuration described in another embodiment, for example, with partial omission without departing from the spirit of the present disclosure.

In the foregoing embodiments, a configuration example in which each voltage command in AC voltage control or DC voltage control is predetermined by a system operator or the like has been described. However, a configuration in which droop characteristics may be imparted to each voltage command in accordance with an output may be employed. Alternatively, in AC voltage control, a configuration in which voltage and frequency are controlled so that inertia is provided to AC systems 1 and 2 may be employed.

Embodiments disclosed here should be understood as being illustrative rather than being limitative in all respects. The scope of the present disclosure is shown not in the foregoing description but in the claims, and it is intended that all modifications that come within the meaning and range of equivalence to the claims are embraced here.

### REFERENCE SIGNS LIST

1, 2 AC system, 3 DC system, 4, 4u, 4v, 4w leg circuit, 5 upper arm, 6 lower arm, 7 converter cell, 8A, 8B reactor, 9A, 9B arm current detector, 10 AC voltage detector, 11A, 11B DC voltage detector, 12, 32 energy storage element (capacitor ), 13 transformer, 16 AC current detector, 17 DC current detector, 20 input converter, 21 sample hold circuit, 22 multiplexer, 23 A/D converter, 24 CPU, 25 RAM, 26 ROM, 27 input/output I/F, 28 auxiliary storage device, 29 bus, 31n1, 31n2, 31n, 31p1, 31p2, 31p switching element, 33 voltage detector, 40, 42, 72, 74 AC power controller, 44 capacitor voltage controller, 46, 48, 66, 75, 420, 448, 566, 568, 642 adder, 50, 52 AC current controller, 54 DC voltage controller, 56 capacitor voltage balance controller, 58 loop current controller, 60, 62 command generator, 64 output fluctuation compensator, 68, 76 DC current controller, 70 AC voltage controller, 78, 644 limiter, 80, 400, 426, 442, 500, 520, 562, 562A to 562C, 564, 566, 580, 646, 700 subtracter, 100 power conversion system, 110, 120 power converter, 130 control system, 132 basic control unit, 134, 136 arm control unit, 402, 422, 502, 522, 582, 586, 702 controller, 424 switching circuit, 428 comparator, 440, 560 voltage calculation unit, 444 proportional element, 446 integrator, 564, 564A, 564C inter group balance controller, 564B inter power converter balance controller, 640 multiplier, Nn low potential DC terminal, Np high potential DC terminal, Nu, Nv, Nw AC input terminal, P1, P2 input/output terminal.

## Claims

1. A power conversion system connected to first and second AC systems and a DC system, comprising:
a first power converter connected between the first AC system and the DC system;
a second power converter connected between the second AC system and the DC system; and
a control system,
wherein the control system controls the first and second power converters in a consolidated manner so that a total sum of a first AC power output from the first power converter to the first AC system, a second AC power output from the second power converter to the second AC system, and a DC power output from the power conversion system to the DC system becomes zero.

2. The power conversion system according to claim 1, wherein
the first AC system and the second AC system are independent of each other, and
the control system includes
a first AC power controller to generate a first AC current command value that is a command value of a first AC current output from the first power converter, through control computation using a deviation between an AC power command value and the first AC power as an input, and
a second AC power controller to generate a second AC current command value that is a command value of a second AC current output from the second power converter, by feeding forward a sum of the first AC power and the DC power.

3. The power conversion system according to claim 2, wherein the control system further includes an output fluctuation compensator to correct the AC power command value so that the first power converter outputs the first AC power to compensate for an amount of change of the second AC power capable of being output.

4. The power conversion system according to claim 2 or 3, wherein
the second AC power controller
generates the second AC current command value by feeding forward a sum of the first AC power and the DC power when a deviation between the AC power command value and the first AC power is greater than a predetermined threshold value, and
generates the second AC current command value by feeding forward a sum of the AC power command value and the DC power when the deviation is smaller than the threshold value.

5. The power conversion system according to any one of claims 2 to 4, wherein
the control system further includes
a first AC current controller to generate a first AC voltage command value that is a command value of a first AC voltage output from the first power converter, through control computation using a deviation between the first AC current command value and the first AC current as an input,
a second AC current controller to generate a second AC voltage command value that is a command value of a second AC voltage output from the second power converter, through control computation using a deviation between the second AC current command value and the second AC current as an input,
a DC current controller to generate a DC voltage command value that is a command value of a DC voltage output from the first and second power converters, through control computation using a deviation between a DC current command value and a DC current output to the DC system as an input,
a first command generator to generate a first control signal for controlling the first power converter, based on the first AC voltage command value and the DC voltage command value, and
a second command generator to generate a second control signal for controlling the second power converter, based on the second AC voltage command value and the DC voltage command value.

6. The power conversion system according to claim 1, wherein
the first AC system and the second AC system are independent of each other, and
the control system includes
a first AC voltage controller that is a command value of a first AC voltage output from the first power converter, through control computation using a deviation between an AC voltage command value and an AC voltage of the first AC system as an input, and
a second AC power controller to generate a second AC current command value that is a command value of a second AC current output from the second power converter, by feeding forward a sum of the first AC power and the DC power.

7. The power conversion system according to claim 1, wherein
the first AC system and the second AC system are identical, and
the control system further includes
a DC voltage controller to generate a DC voltage command value that is a command value of a DC voltage output from the first and second power converters, through control computation using a deviation between a DC voltage command value and a DC voltage output to the DC system as an input,
an AC power controller to generate a first AC current command value that is a command value of a first AC current output from the first power converter and a second AC current command value that is a command value of a second AC current output from the second power converter, by feeding forward the DC power,
a first AC current controller to generate a first AC voltage command value that is a command value of a first AC voltage output from the first power converter, through control computation using a deviation between the first AC current command value and the first AC current as an input,
a second AC current controller to generate a second AC voltage command value that is a command value of a second AC voltage output from the second power converter, through control computation using a deviation between the second AC current command value and the second AC current as an input,
a first command generator to generate a first control signal for controlling the first power converter, based on the first AC voltage command value and the DC voltage command value, and
a second command generator to generate a second control signal for controlling the second power converter, based on the second AC voltage command value and the DC voltage command value.

8. The power conversion system according to claim 1, wherein
the first AC system and the second AC system are identical, and
the control system further includes
a first AC current controller to generate a first AC voltage command value that is a command value of a first AC voltage output from the first power converter, through control computation using a deviation between a first AC current command value based on an AC power command value and a first AC current output from the first power converter as an input,
a second AC current controller to generate a second AC voltage command value that is a command value of a second AC voltage output from the second power converter, through control computation using a deviation between a second AC current command value based on the AC power command value and a second AC current output from the second power converter as an input,
an AC power controller to generate a DC current command value that is a command value of a DC current output to the DC system, through control computation using a deviation between the AC power command value and a sum of the first AC power and the second AC power as an input,
a DC current controller to generate a DC voltage command value that is a command value of a DC voltage output from the first and second power converters, through control computation using a deviation between the DC current command value and the DC current as an input,
a first command generator to generate a first control signal for controlling the first power converter, based on the first AC voltage command value and the DC voltage command value, and
a second command generator to generate a second control signal for controlling the second power converter, based on the second AC voltage command value and the DC voltage command value.

9. The power conversion system according to claim 8, wherein
the control system further includes a limiter having a limit value set equal to or smaller than a permissible current value of the first power converter, the limiter limiting the first AC current command value within a range in accordance with the limit value, and
the second AC current controller receives, as the second AC current command value, a difference between the first AC current command value input to the limiter and the first AC current command value output from the limiter.

10. The power conversion system according to any one of claims 2 to 5, wherein
each of the first and second power converters includes a plurality of arms each having a plurality of converter cells connected to each other in cascade,
each of the converter cells including
a plurality of switching elements,
an energy storage element connected to the switching elements, and
a voltage detector to detect a voltage of the energy storage element, wherein
the control system further includes
a capacitor voltage controller to calculate an all voltage evaluation value for evaluating a total sum of stored energy of the energy storage elements in the entire power conversion system, from voltages of all the energy storage elements in the first and second power converters, and generate a first current command correction value for correcting the first AC current command value and a second current command correction value for correcting the second AC current command value, through control computation using a deviation between an all voltage command value and the all voltage evaluation value as an input.

11. The power conversion system according to claim 10, wherein the capacitor voltage controller generates the first and second current command correction values, through proportional integral computation using a deviation between the all voltage command value and the all voltage evaluation value as an input.

12. The power conversion system according to claim 10, wherein the capacitor voltage controller generates the first current command correction value, through proportional computation using a deviation between the all voltage command value and the all voltage evaluation value as an input, and generates the second current command correction value, through proportional integral computation using the deviation as an input.

13. The power conversion system according to claim 6, wherein
each of the first and second power converters includes a plurality of arms each having a plurality of converter cells connected to each other in cascade,
each of the converter cells including
a plurality of switching elements,
an energy storage element connected to the switching elements, and
a voltage detector to detect a voltage of the energy storage element, wherein
the control system further includes
a capacitor voltage controller to calculate an all voltage evaluation value for evaluating a total sum of stored energy of the energy storage elements in the entire power conversion system, from voltages of all the energy storage elements in the first and second power converters, and generate a current command correction value for correcting the second AC current command value, through control computation using a deviation between an all voltage command value and the all voltage evaluation value as an input.

14. The power conversion system according to claim 7 or 8, wherein
each of the first and second power converters includes a plurality of arms each having a plurality of converter cells connected to each other in cascade,
each of the converter cells including
a plurality of switching elements,
an energy storage element connected to the switching elements, and
a voltage detector to detect a voltage of the energy storage element, wherein
the control system further includes
a capacitor voltage controller to calculate an all voltage evaluation value for evaluating a total sum of stored energy of the energy storage elements in the entire power conversion system, from voltages of all the energy storage elements in the first and second power converters, and generate a current command correction value for correcting the first and second AC current command values, through control computation using a deviation between an all voltage command value and the all voltage evaluation value as an input.

15. The power conversion system according to any one of claims 10 to 14, wherein
the control system further includes
a capacitor voltage balance controller to generate a loop current command value for balancing voltages of the energy storage elements in each arm included in the first power converter and the second power converter, and
a loop current controller to control loop current circulating through inside of the power conversion system, based on the loop current command value.

16. The power conversion system according to claim 15, wherein
the capacitor voltage balance controller includes
a first balance controller to control balance of voltages of the energy storage elements between the arms in the first power converter,
a second balance controller to control balance of voltages of the energy storage elements between the arms in the second power converter, and
a third balance controller to control balance of voltages of the energy storage elements between the first and second power converters.

17. A control system to control a power conversion system connected to first and second AC systems and a DC system,
the power conversion system comprising:
a first power converter connected between the first AC system and the DC system; and
a second power converter connected between the second AC system and the DC system,
wherein the control system controls the first and second power converters in a consolidated manner so that a total sum of a first AC power output from the first power converter to the first AC system, a second AC power output from the second power converter to the second AC system, and a DC power output from the power conversion system to the DC system becomes zero.
